# EUROPEAN PATENT APPLICATION

(11) **EP 1 330 107 A1**
(43) Date of publication of application: **23.07.2003**
(21) Application number: 01967789.7
(22) Date of filing: 21.09.2001
(51) Int. Cl.: H04N 1/00, H04N 1/21, G06F 17/60

(54) **DOCUMENT ACQUIRING DEVICE, DOCUMENT FILING SYSTEM, AND ELECTRONIC DOCUMENT NOTARIZING SYSTEM**

(30) Priority: 22.09.2000 JP 2000289518; 19.09.2001 JP 2001285831
(71) Applicant: Ricoh Company, Ltd., Tokyo 143-8555 (JP)
(72) Inventor: ITO, Tatsuo, Sagamihara-shi, Kanagawa 229-0006 (JP); ARAUMI, Yuichi, Tokyo 145-0072 (JP)
(74) Representative: Schwabe - Sandmair - Marx
(86) International application number: JP0108251
(87) International publication number: WO02025927

(57) **Abstract**

An image processing apparatus that has at least one of a scanning function, a printing function, a copying function, and a facsimile function, and is connected via a communication channel to a server storing image data includes: a memory storing image information printed on or scanned from a paper sheet; a transfer unit automatically transferring appendant information specifying the image information to the server together with the image information irrespective of the presence or absence of an explicit command to transfer from a user; a display operating unit displaying a list of a plurality of users so as to obtain a user name as the appendant information so that the user selects the user name; and user name initial-part search and selective display means for performing a search on the user names by initial parts thereof using at least one letter or figure entered from the display operating unit and displaying a result.

## Description

### TECHNICAL FIELD

The present invention relates to a document capturing device and a document filing system applied to a processing system performing data processing such as document duplication, facsimile communication, or document scanning so as to store image data captured by the data processing, and to an electronic document certificating system for certifying the date and time of creation of the image data.

### BACKGROUND ART

Conventionally, such important documents as to require storing (such as document data representing images and characters) and documents that may be used in the future are filed as they are in the form of paper and arranged on bookshelves.

In offices handling a large amount of documents, however, space is required to store the documents, and further, it takes a lot of time and effort to find a desired document from the documents.

In recent years, therefore, with a decrease in the price of storage means such as a hard disk unit and an optical disk unit as well as the advancement of data processing technologies and an increase in the speed thereof, a so-called document filing system that reads the image of a document to be stored by a scanner, and stores the image retrievably and readably in a large-capacity storage device has been proposed to be used by not only offices handling a large amount and many types of documents but also individual users.

In the above-described filing system, however, the image of the document should be read by a scanner, thus causing the problem of complicated operations for reading and storing the image data of the document.

The documents to be stored in a filing device are duplicated documents made by a copier to be used for meetings or documents transmitted to or received from clients by a facsimile machine. Therefore, a document filing system such as a multifunction peripheral (MFP) that integrates the copying function, the facsimile function, and the scanner function has been proposed. The multifunction peripheral, using the fact that the documents to be stored are converted to an electrical signal one or more times, transmits the same data as the digitized image data to storage means, so that it is stored and retained therein.

However, the documents handled in the above-described filing system are exposed to a person in charge, who becomes aware of a password for accessing the stored files. Accordingly, there is a problem in security.

Therefore, there has been proposed a highly useful document filing system that, by specifying users who use the copying function, the facsimile function, and the scanner function, using the operation panel of the multifunction peripheral, so that the image data digitized in each function is stored in the storage means so as to correspond to its user information, ensures the security of the image data stored by the user information and enables necessary image data to be retrieved easily.

However, in the case of using the above-described conventional filing system in a large organization in which as many as tens of users are permitted to use the system by their user information, there is the problem that a user list continues for a plurality of screens so that it takes time and effort to find a desired user and it also takes as much time and effort to confirm an already selected user.

The present invention is made to solve the above-described problems, and has the first object of increasing convenience in specifying users in filing the image data of documents.

Further, in the above-described conventional document filing systems, the stored data become reusable only after the image data are transferred to the storage means via a network and the stored image data are accessed via a personal computer. In the state before transferring the image data to the storage means via the network, that is, in the state
where the image data are stored in the internal secondary storage of the MFP (multifunction peripheral), it is impossible to access and reuse the image data. Accordingly, in the state where no transferring to the storage means is allowed due to the occurrence of network error or the storage means itself is down, there is the problem that the data are only stored in the internal secondary storage of the MFP (multifunction peripheral) and prevented from being reused. Further, there is also the problem that if such a state lasts for a long period of time, the internal secondary storage of the MFP is filled to its capacity so that no more storing is possible.

The second object of the present invention is to increase convenience in using the filed image data by allowing the image data to be reused even if network error occurs in filing the image data of documents.

Further, the present invention relates to an electronic document certificating system. For instance, it relates to a system for certifying the date of creation or use of an electronic or paper document or other media, and is applied to an electronic document managing system, a network-type filing system, a digital watermarking system, and a system for certifying earlier inventions of patents or ideas. Further, it is also employed as an additional function to a server computer or a local storage function.

The conventional digital watermarking system certifies information on date and time and an author with respect to an electronic document (Japanese Laid-Open Patent Application No. 2000-10478), and is configured to certify the information at the point at which the electronic document is registered with the digital watermarking system.

In order to certify date and time or copyright with respect to a printed document, it is necessary for a user to capture data into the digital watermarking system. Accordingly, for instance, with respect to each of the documents used in daily operations, it is necessary to determine whether the document has such contents as to require the certifying of date and time and copyright and perform the capturing of data when the certifying of date and time and copyright is necessary. That is, it is necessary to consciously perform the operation of determining the importance of a document, converting the document to an electronic document using an input device such as a scanner, and registering the document for certification. Even if it becomes necessary later to certify date and time with respect to those unregistered with none of their data being captured due to the determination that they require no certification, it is impossible to certify date and time retroactively.

In order to certify earlier inventions of patents or ideas, they should be registered at the time of their creation. In the above-described conventional systems, however, there may be a delay in time, so that in the case of making registration after the certification becomes necessary, the date and time of registration may be,days or months later.

The third object of the present invention is to prevent forgetting to make registration and a delay in the date and time of registration and also release a user from trouble such as the selecting of documents to be registered and registration operations by providing a system capable of certifying data without the user consciously registering the data.

### DISCLOSURE OF THE INVENTION

According to the present invention, an image processing apparatus that has at least one of a scanning function, a printing function, a copying function, and a facsimile function, and is connected via a communication channel to a server storing image data includes: a memory storing image information printed on or scanned from a paper sheet; a transfer unit automatically transferring appendant information specifying the image information to the server together with the image information irrespective of the presence or absence of an explicit command to transfer from a user; a display operating unit displaying a list of a plurality of users so as to obtain a user name as the appendant information so that the user selects the user name; and a user name initial-part search and selective display unit that performs a search on the user names by initial parts thereof using at least one letter or figure entered from the display operating unit and displaying a result.

According to the above-described invention, even if a large number of users are registered, a desired user can be displayed by the initial-part search function, thereby increasing convenience in specifying a user in filing the image data of a document.

Further, according to the present invention, an image processing apparatus that has at least one of a scanning function, a printing function, a copying function, and a facsimile function, and is connected via a communication channel to a server storing image data includes: a memory storing image information printed on or scanned from a paper sheet; a transfer unit automatically transferring the image information to the server irrespective of the presence or absence of an explicit command to transfer from a user; a display operating unit displaying a list of the image data stored in said memory; and a reprocessing unit reprocessing image information selected from the displayed list using at least one of the functions.

According to the above-described invention, the documents stored in a local memory (storage device) are displayed in a list so that a desired document may be selected and reused. Thereby, even if network error occurs in filing the image data of a document, the image data can be reused. Therefore, convenience in using the filed image data can be increased.

Further, according to the present invention, an image processing system that has at least one of a scanning function, a printing function, a copying function, and a facsimile function and has a function of storing image data includes: a data acquiring unit acquiring image information printed on or scanned from a paper sheet; a time information generating unit generating a present time as time information; and a storage unit that correlates and automatically stores and retains the image information and the time information irrespective of the presence or absence of an explicit command to store from a user, and prevents the time information correlated with the image information from being changed.

According to the above-described invention, the image information and the time information are correlated and automatically stored and retained irrespective of the presence or absence of an explicit command to store from a user, and the time information correlated with the image information is prevented from being changed. Thereby, omission of registration and a delay in the date and time of registration can be prevented, and a user is saved from the trouble of selecting a document requiring registration and performing a registration operation. In this configuration, the correlation may be made by embedding the time information in the image information by digital watermarking.

### BRIEF DESCRIPTION OF THE DRAWINGS

Other objects, features and advantages of the present invention will become more apparent from the following detailed description when read in conjunction with the accompanying drawings, in which:
FIG. 1 is a block diagram showing the configuration of a document filing system according to an embodiment of the present invention;
FIG. 2 is a diagram showing the external appearance of part of a display operating part and a display port shown in FIG. 1;
FIG. 3 is a diagram showing displays of the display port shown in FIG. 2;
FIG. 4 is a diagram showing another display of the display port shown in FIG. 2;
FIG. 5 is a diagram showing other displays of the display port shown in FIG. 2;
FIG. 6 is a diagram showing another display of the display port shown in FIG. 2;
FIG. 7 is a diagram showing another display of the display port shown in FIG. 2;
FIG. 8 is a flowchart showing an operation of controlling the display operating part by a CPU shown in FIG. 1;
FIG. 9 is a flowchart showing an operation subsequent to FIG. 8;
FIG. 10 is a flowchart showing an operation subsequent to FIG. 8;
FIG. 11 is a flowchart showing an operation subsequent to FIG. 8;
FIG. 12 is a diagram showing another example of the external appearance of the part of the display operating part and the display port shown in FIG. 1;
FIG. 13 is a flowchart showing another operation of controlling the display operating part by the CPU shown in FIG. 1;
FIG. 14 is a flowchart showing an operation subsequent to FIG. 13;
FIG. 15 is a flowchart showing an operation subsequent to FIG. 13;
FIG. 16 is a flowchart showing an operation subsequent to FIG. 13;
FIG. 17 is a diagram showing a display of the display port shown in FIG. 12;
FIG. 18 is a flowchart showing yet another operation of controlling the display operating part by the CPU shown in FIG. 1;
FIG. 19 is a flowchart showing an operation subsequent to FIG. 18;
FIG. 20 is a flowchart showing an operation subsequent to FIG. 18;
FIG. 21 is a flowchart showing an operation subsequent to FIG. 18;
FIG. 22 is a diagram showing another display of the display port;
FIG. 23 is a flowchart showing yet another operation of controlling the display operating part by the CPU shown in FIG. 1;
FIG. 24 is a diagram showing yet another display of the display port shown in FIG. 12;
FIG. 25 is a flowchart showing yet another operation of controlling the display operating part by the CPU shown in FIG. 1;
FIG. 26 is a flowchart showing an operation subsequent to FIG. 25;
FIG. 27 is a diagram showing yet another display of the display port shown in FIG. 12;
FIG. 28 is a flowchart showing yet another operation of controlling the display operating part by the CPU shown in FIG. 1;
FIG. 29 is a flowchart showing an operation subsequent to FIG. 28;
FIG. 30 is a diagram showing a first embodiment of an electronic document certifying system according to the present invention;
FIG. 31 is a diagram showing a configuration of a server;
FIG. 32 is a diagram showing a configuration of an input/output device;
FIG. 33 is a flowchart showing the operation of the first embodiment of the electronic document certifying system according to the present invention;
FIG. 34 is a diagram showing a second embodiment of the electronic document certifying system according to the present invention;
FIG. 35 is a diagram showing a configuration of an input/output device of FIG. 34;
FIG. 36 is a flowchart showing the operation of the second embodiment of the electronic document certifying system according to the present invention;
FIG. 37 is a diagram showing a third embodiment of the electronic document certifying system according to the present invention;
FIG. 38 is a diagram showing the operation of the third embodiment of the electronic document certifying system according to the present invention; and
FIG. 39 is a diagram showing a fourth embodiment of the electronic document certifying system according to the present invention.

### BEST MODE FOR CARRYING OUT THE INVENTION

A description will now be given, with reference to the drawings, of embodiments of the present invention.

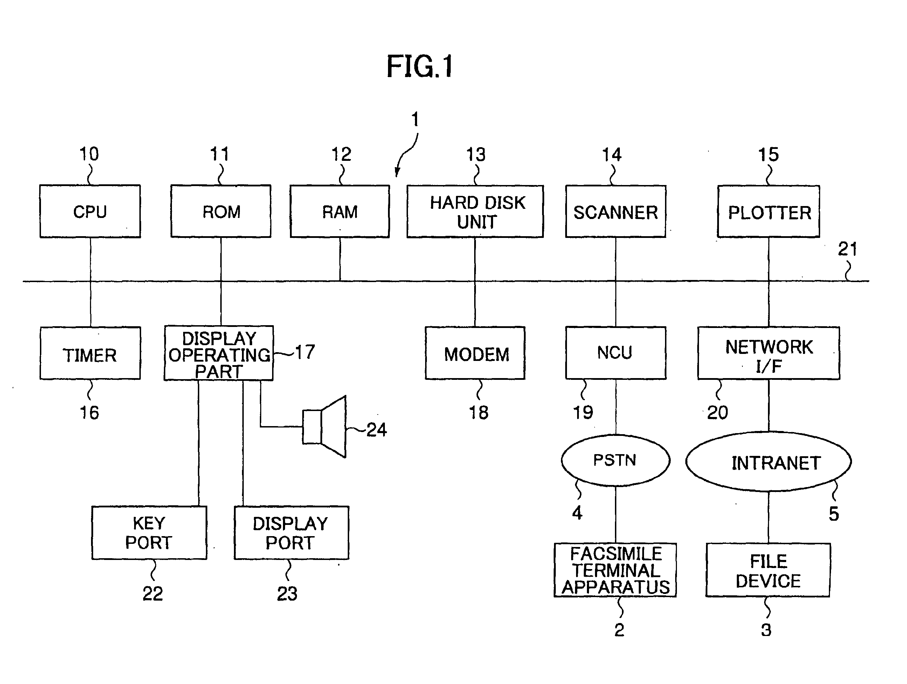

FIG. 1 is a block diagram showing the configuration of a document filing system according to an embodiment of the present invention.

In the document filing system, a digital copier (MultiFunction Peripheral: MFP) 1 includes a document capturing device. The MFP 1 performs a variety of processing as a data processing apparatus and performs processing according to the present invention with a CPU 10 reading out a control program prestored in a ROM 11 and managing and controlling each part of the digital copier, using a RAM 12 as a work area for temporarily storing image data and a sensor signal.

A file device (not shown in the drawing) storing and managing the image data of documents retrievably and readably in a large-capacity storage device (storage means) such as a hard disk unit or an optical disk unit is connected to the MFP 1 through an intranet 5 by a network I/F (interface) 20, thereby constructing a document filing system that reusably files (stores and retains) image data processed by a user by directly transferring the processed image data to the file device irrespective of the presence or absence of a transfer command.

At this point, for instance, user information is obtained by specifying a user name or a user ID in using the MFP 1, and the image data is transferred to the file device together with the user information. In the file device, the user information and the image information are stored and retained, correlated with each other, so that the user information is employed as additional data for specifying the image information. This makes it possible to ensure the security of image data (such as document data) and retrieve necessary image data by its additional data. Further, when the user ID such as a user name is not specified, a default shared ID may be set to be stored and retained with the image data in the same way. Thus, by automatically storing and retaining image data (such as document data) processed in the MFP 1 in the file device when the processing is performed, the document filing system that automatically stores the image data of documents used in daily operations without intentional filing by a user is constructed.

Needless to say, the file device may be connected directly instead of being connected via the network.

In the MFP 1, a scanner 14, a plotter 15, a timer 16, a display operating part 17, a modem 18, and a network control unit (NCU) 19 as well as the ROM 11, the RAM 12, a hard disk unit 13, and the network I/F 20 are connected via a system bus 21 to the CPU 10. The CPU 10 manages and controls each of the above-described parts 11 through 19, so that the scanner 14 functions as an image reading device. Thereby, the MFP 1 can be used as a copier having the transmission function of transmitting image data by facsimile communication, the duplication (copying) function of recording and outputting the image data read by the scanner 14, and the recording function of recording and outputting received image data.

The timer 16 is the timer function used when the CPU 10 controls each part of the MFP 1, and is used, for instance, in performing counting for timing for synchronizing the parts of the MFP 1 with one another.

The MFP 1 may be configured to be usable as a printer that receives image data from a PC and records and outputs the image data, or a scanner device that transmits image data read by a scanner to a PC, and may process these image data in the same way as in the processing according to the present invention.

Next, a description will be given briefly of operations of the document filing system.

The scanner 14 separates and feeds sheet-like originals set on a document table one by one by an automatic document feeder (ADF) and positions the originals on a contact glass (reading position), for instance. Thereafter, by an image reading method according to a well known technology, the scanner 14 irradiates the originals (documents composed of images and characters) with the light of an exposure lamp, and converts the light reflected from the document surfaces photoelectrically by a CCD, thereby reading the image data of the original documents.

The plotter 15 transfers and fixes a toner image to a paper sheet conveyed from a paper feed cassette, and ejects the paper sheet out of the apparatus. The toner image is obtained by attaching toner to (developing with toner) an electrostatic latent image into which the image data read/received to be latched in the RAM 12 forming an image memory part are optically written, for instance, by an electrophotographic recording method according to a well known technology, on a photosensitive body charged while being rotated.

With respect to the modem 18 and the NCU 19, the modem 18 modulates and demodulates image data and procedure signals, and the NCU 19 establishes or interrupts connection with a public switched telephone network (PSTN) by controlling connection therewith. Thereby, facsimile communication exchanging facsimile data with a designated facsimile terminal apparatus is performed.

The MFP 1 may include an image processing part that functions as data construction reconstruction (DCR) that codes and compresses image data and decodes and decompresses the image data at the time of its reproduction. Needless to say, at the time of copying, the image data may be subjected to image processing that enlarges or reduces an image to a size specified by a user.

The display operating part 17 is composed of a key port 22, a display port 23, and a loudspeaker 24 prepared inside an operation port provided on the upper front side of the apparatus main body of the MFP 1. The display port 23, which displays a variety of information such as driving conditions, an apparatus condition, and input conditions, is formed of a display operating LCD (Liquid Crystal Display) with a touch panel for a user to select a function and input the selection.

The CPU 10 of the MFP 1 is also formed as transfer means. For instance, while recording and outputting (printing) image data read by the scanner 14 on recording paper sheets using the plotter 15 and performing facsimile transmission using the modem 18 and the NCU 19, the CPU 10 performs the transfer operation of temporarily storing the same image data also in the hard disk unit (storage means) 13 with specifying information for specifying the read image data, such as information on date and time of processing, the number of copies, and a designated telephone number, being added thereto, and thereafter, transmitting the image data via the network I/F 20 to the file device (not shown in the drawing).

A description will be given briefly of the file device connected to the MFP 1. The file device may be formed of a common personal computer (PC). By performing operations in accordance with an application program read out from a memory by operating a keyboard or a mouse while looking at a display, the image data transferred from the MFP 1 are retrieved and read out to be displayed, recorded, and output in the same way as a variety of operations including the creation of documents or images are performed. Thereby, the image data are stored and retained in a large-capacity storage device so as to be reusable by an authorized user.

With respect to each of serially processed documents, the image data is stored and retained in the large-capacity storage device so as to be related to their corresponding specifying information. Thereafter, at the request of the user, part of the documents (for instance, the thumbnail images of the first pages) are displayed and output on the display in a calendar display format so as to be selectable based on the specifying information such as date and time of processing. The selected image data are read from the large-capacity storage device document by document, and, for instance, transmitted to the MFP 1 to be recorded and output, so that their contents are checked. Thus, the image data can be reused.

The image data may be successively displayed and output document by document on the display, so that the image data may be reused, being processed as digitized by the PC.

That is, the scanner 14 performs the function of image reading means for reading documents as image data. The plotter 15 performs the function of printing means for printing the image data read by the image reading means. The NCU 19 performs the function of transmission means for transmitting the image data read by the image reading means to a destination via a communications network. The CPU 10 performs the function of means for storing the image data read by the image reading means in a secondary storage device or transmitting the image data via a communications network or a network to a connected storage device and requesting to store the image data.

The CPU 10, the display operating part 17, and the display port 23 perform the functions of: display means for displaying information for various operations; operation screen and user name specifying screen switching means for switching, in the display means, an operation screen for operating the copying function of copying the image data, the document transmitting function of transmitting the image data to a destination, or the document reading function by the image reading means and a user name specifying screen for specifying the names of users of the above-described functions on the operation screen; and user name initial-part search and selective display means for performing a search on the user names by their initial parts using alphabetical or *kana* letters (at least one letter or figure), and displaying the result on the user name specifying screen to which switching has been performed by the above means.

Further, the CPU 10, the display operating part 17, the display port 23, and the loudspeaker 24 perform the function of notification means for issuing, when there is no corresponding user name, a notification to that effect. The CPU 10, the display control part 17, and the display port 23 perform the function of displaying the user names corresponding to the alphabetical or *kana* letters (at least one letter or figure) subsequent to those of the initial-part search.

The CPU 10, the display operating part 17, and the display port 23 perform the function of user name specifying screen and user name list display screen switching means for switching the user name specifying screen and a user name list display screen for displaying a list of the users selected on the user name specifying screen.

Further, the CPU 10, the display operating part 17, and the display port 23 perform the function of user list display means for displaying a list of the users selected on the user specifying screen when the user name specifying screen is switched to the operation screen of the copying function, the document transmitting function, or the document reading function by the operation screen and the user name specifying screen switching means.

Further, the CPU 10, the display operating part 17, and the loudspeaker 24 perform the function of voice notification means for notifying the list of the users selected on the user name specifying screen by voice.

Further, the CPU 10, the display operating part 17, and the display port 23 perform the function of operation screen/user name specifying screen/list display screen switching means for switching: the operation screen for operating the copying function of copying the image data, the document transmitting function of transmitting the image data to a destination, or the document reading function by the image reading means; the user name specifying screen for specifying the names of users of the above-described functions on the operation screen; and a list display screen for displaying a list of the image data of the documents stored in the secondary storage device.

Further, the CPU 10, the display operating part 17, and the display port 23 perform the function of second operation screen/user name specifying screen/list display screen switching means for switching: the operation screen for operating the copying function of copying the image data, the document transmitting function of transmitting the image data to a destination, or the document reading function by the image reading means; the user name specifying screen for specifying the names of users of the above-described functions on the operation screen; and a list display screen for displaying a list of the image data of the documents stored in the secondary storage device, the image data being processed by the users of the user names specified on the user name specifying screen.

Further, the CPU 10 performs the function of reprocessing means for specifying and reprocessing the image data of one or a plurality of documents, using the above-described functions, on the list display screen to which switching has been performed by the second operation screen/user name specifying screen/list display screen switching means.

Further, the CPU 10 performs the function of deletion means for deleting, from the secondary storage device, the image data of a document specified on the list display screen to which switching has been performed by the second operation screen/user name specifying screen/list display screen switching means.

Further, the CPU 10, the display operating part 17, and the display port 23 perform the function of switching restricting means for restricting switching to the list display screen when a request for switching to the list display screen is made by the second operation screen/user name specifying screen/list display screen switching means.

Next, a description will be given of the processing related to claims 1 through 3, 5, 10 through 12, and 14 of the present invention and example operations and displays in the document filing system shown in FIG. 1.

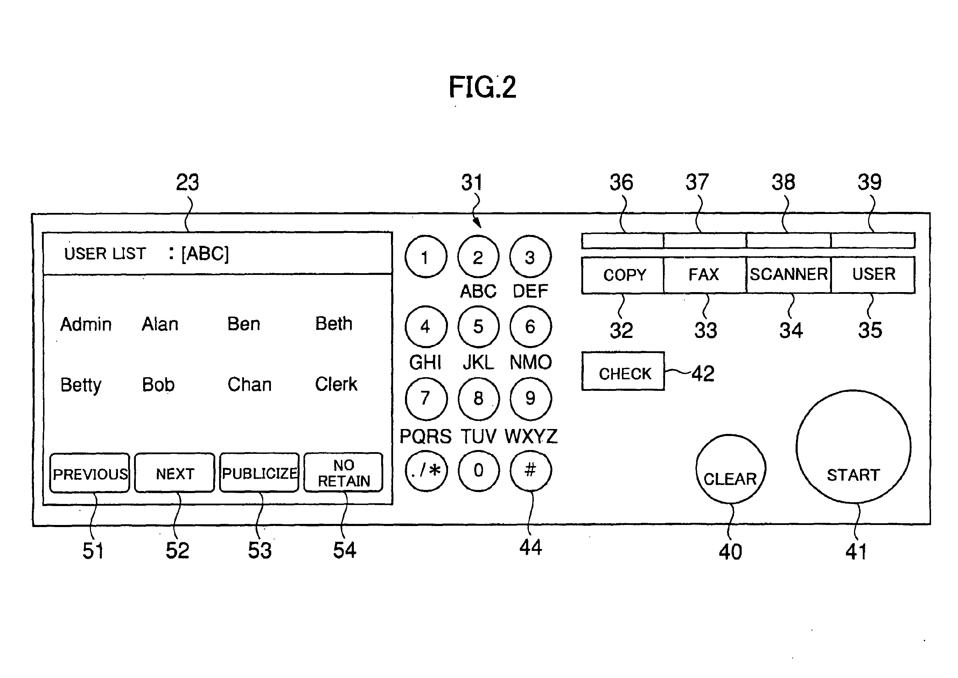

FIG. 2 is a diagram showing the external appearance of part of the display operating part 17 and the display port shown in FIG. 1.

The part of the display operating part 17 includes the display port 23 formed of the display operating LCD with a touch panel, a copying function selecting key (copy key) 32, a FAX function selecting key (FAX key) 33, a scanner function selecting key (scanner key) 34, a user specifying screen selecting key (user key) 35, an LED 36 indicating that the copying function is selected, an LED 37 indicating that the FAX function is selected, an LED 38 indicating that the scanner function is selected, an LED 39 indicating that the user specifying screen is selected, alphanumeric keys 31, a CLEAR key 40, a START key 41, and a CHECK key 42.

When the MFP 1 is turned on or the user specifying screen is specified by the user specifying screen selecting key 35, the display port 23 displays a user list for specifying a user, a publicizing key 53 for specifying whether to publicize a captured document to all users, a non-retention key 54 for specifying whether to specify the refusal of capturing, a previous page key 51 for moving.through the user list to the previous page, and a next page key 52 for moving through the list to the next page.

At this point, the LED 39 lights to show that the user specifying screen is selected. Further, when each of the function selecting keys 32 through 34 is pressed, the display port 23 displays a variety of information such as driving conditions, an apparatus condition, and input conditions required to operate the selected function, and receives a setting input operation through the touch panel by the user. One of the LEDs 36 through 38 corresponding to the selected function lights.

When the user is specified or publicizing is specified on the user specifying screen, and successively thereafter, another function is selected by the function selecting key, the LED 39 switches from ON to blinking. Further, when the specifying of the refusal of capturing is selected and successively thereafter, another function is selected by the function selecting key, the LED 39 switches from ON to OFF. That is, the LED 39 notifies whether image capturing is to be performed.

The alphanumeric keys 31 have the function of inputting the alphabet assigned to the numeric keys. Here, for simplification of description, a description will be given of the case of the alphabet, but the same applies to the case of the *kana*.

For instance, the key of 2 of the alphanumeric keys 31 inputs the number "2", and also performs the function of a key for performing an initial-part search on the users for those starting with A, B, or C of the alphabet. When this key is pressed, the user specifying screen of the display port 23 displays the user names starting with [A, B, or C].

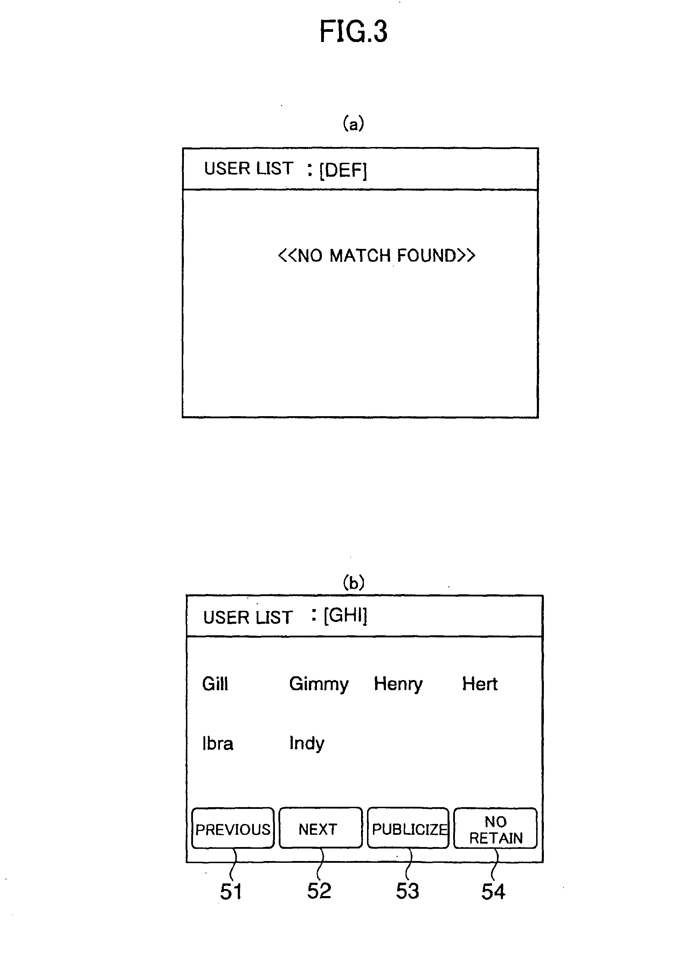

At the time of the displaying, when there are more user names than can be displayed in one page, the next page key 52 appears. In the case of turning to the next page by the next page key 52, the previous page key 51 appears. When there is no user corresponding to the selected initial-part search key, the message of "NO MATCH FOUND" indicating that there is no corresponding user is displayed for two seconds as shown in (a) of FIG. 3, and as shown in (b) of FIG. 3, the subsequent users searched out by their initial parts, that is, the users starting with G, H, or I, are displayed.

If there is no user starting with G, H, or I, the subsequent users are further displayed in the same procedure as described above. The message is displayed in this case, but it is also possible to make notification by voice using the loudspeaker 24.

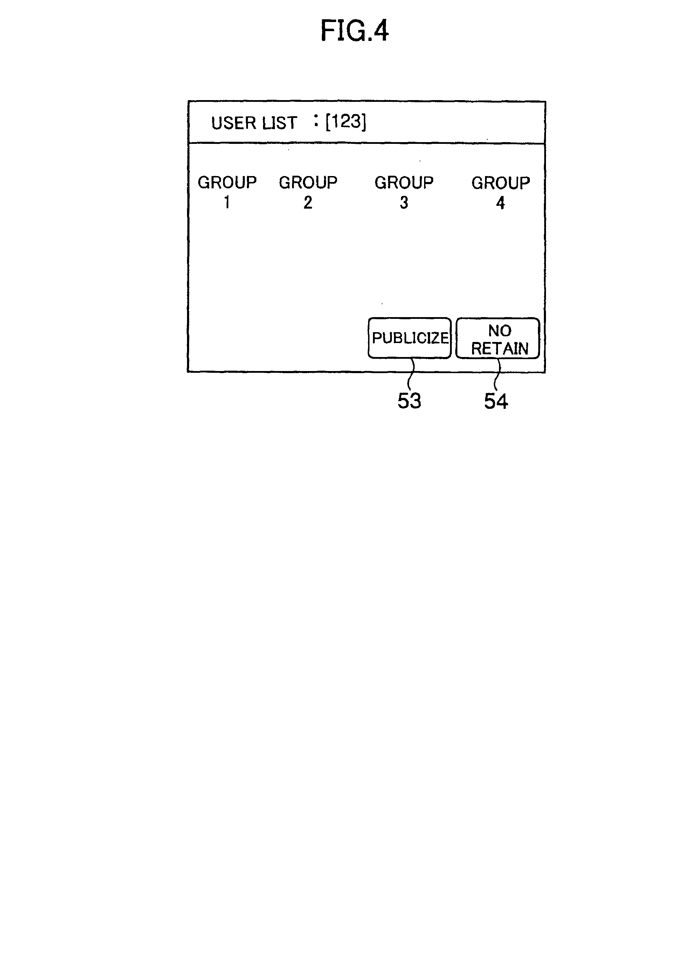

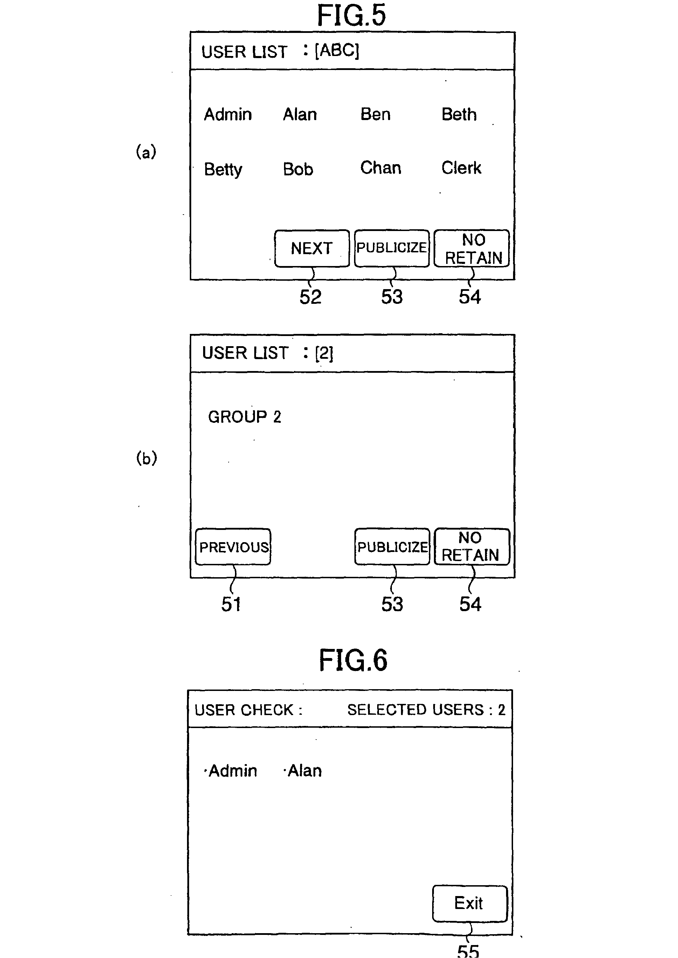

With respect to user names starting with numbers, there is a method that displays a display screen as shown in FIG. 4 when a # key 44 of the alphanumeric keys 31 is pressed. According to another method, both alphabet and numbers are shown on the alphanumeric keys 31 so that a display screen that displays users in alphabetical order is displayed at the first pressing as shown in (a) of FIG. 5 and a display screen that displays numeric users is displayed at the second pressing as shown in (b) of FIG. 5.

When a user name desired to be selected is touched on the user specifying screen, the user name is highlighted so as to indicate that it is selected. When the CHECK key 42 is pressed, a list of currently selected users is displayed on a selected user display screen as shown in FIG. 6.

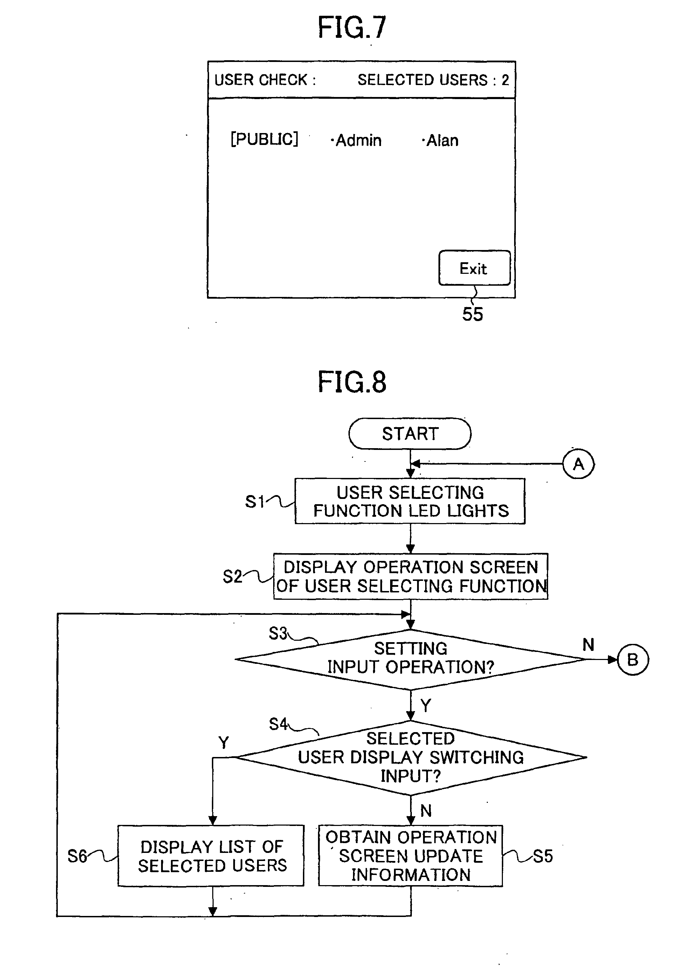

When publicizing is specified, [PUBLIC] is displayed as shown in FIG. 7.

At this point, the selected users may be communicated by voice from the loudspeaker 24 in timing with the pressing of the CHECK key 42.

When an Exit key 55 is pressed, the user specifying screen returns. Further, when the function selecting keys are pressed, the operation screens of the respective functions are displayed.

FIGS. 8 through 11 are flowcharts showing an operation of controlling the display operating part 17 by the CPU 10.

According to this operation, as shown in FIG. 8, when the user specifying screen selecting key is pressed, in step (shown by "S" in the drawings) 1, the LED indicating that the user selecting function is selected lights, and in step 2, the user specifying screen of the user selecting function is displayed.

In step 3, it is determined whether a setting input operation is performed on the user specifying screen, and if it is performed, in step 4, it is determined whether it is an input of switching to the display screen of a list of the users having a selected alphabetical letter as their initials. If it is the input of switching, in step 6, the list of the users having the selected alphabetical letter as their initials is displayed, and it returns to step 3.

If it is determined in step 4 that it is not the input of switching, in step 5, the operation screen update information corresponding to the contents of the setting input operation is obtained, and a screen based on the operation screen update information is displayed. Then, it returns to step 3.

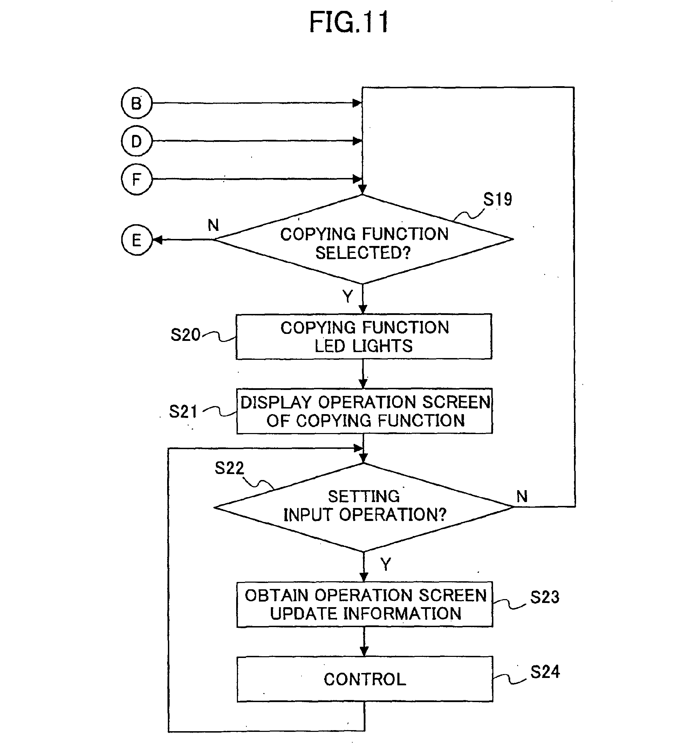

If it is determined in step 3 that no input setting operation is performed, it proceeds to step 19 of FIG. 11.

As shown in FIG. 11, in step 19, it is determined whether the copying function is selected. If the copying function is selected, in step 20, the LED indicating that the copying function is selected lights, and in step 21, the operation screen of the copying function is displayed. Then, in step 22, it is determined whether a setting input operation is performed on the operation screen of the copying function.

If it is determined in step 22 that a setting input operation is performed, in step 23, the operation screen update information corresponding to the contents of the setting input operation is obtained, and a screen based on the operation screen update information is displayed. Then, in step 24, the function control corresponding to the operation is performed, and it returns to step 22.

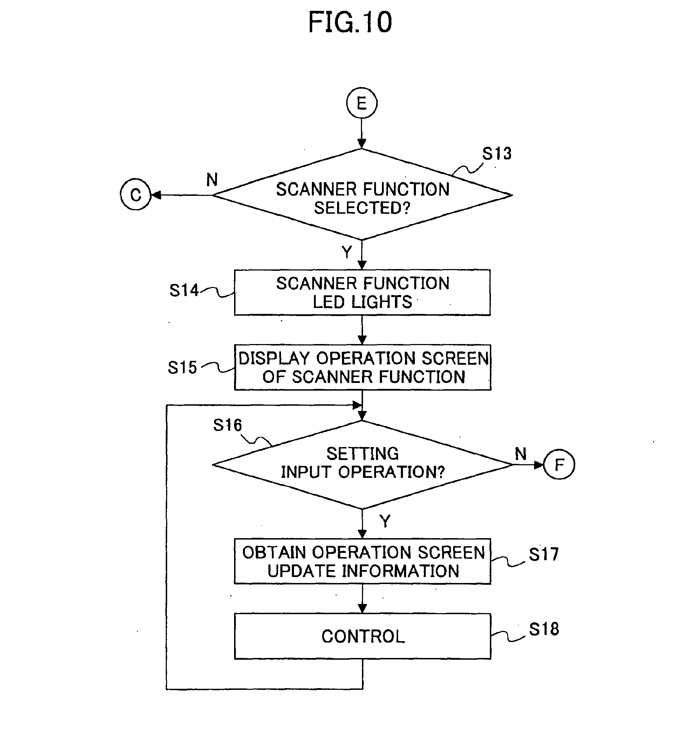

If it is determined in step 19 that the copying function is not selected, it proceeds to step 13 of FIG. 10. Further, if it is determined in step 22 that no setting input operation is performed, it returns to step 19.

As shown in FIG. 10, in step 13, it is determined whether the scanner function is selected. If the scanner function is selected, in step 14, the LED indicating that the scanner function is selected lights, and in step 15, the operation screen of the scanner function is displayed. Then, in step 16, it is determined whether a setting input operation is performed on the operation screen of the scanner function.

If it is determined in step 16 that a setting input operation is performed, in step 17, the operation screen update information corresponding to the contents of the setting input operation is obtained, and a screen based on the operation screen update information is displayed. Then, in step 18, the function control corresponding to the operation is performed, and it returns to step 16.

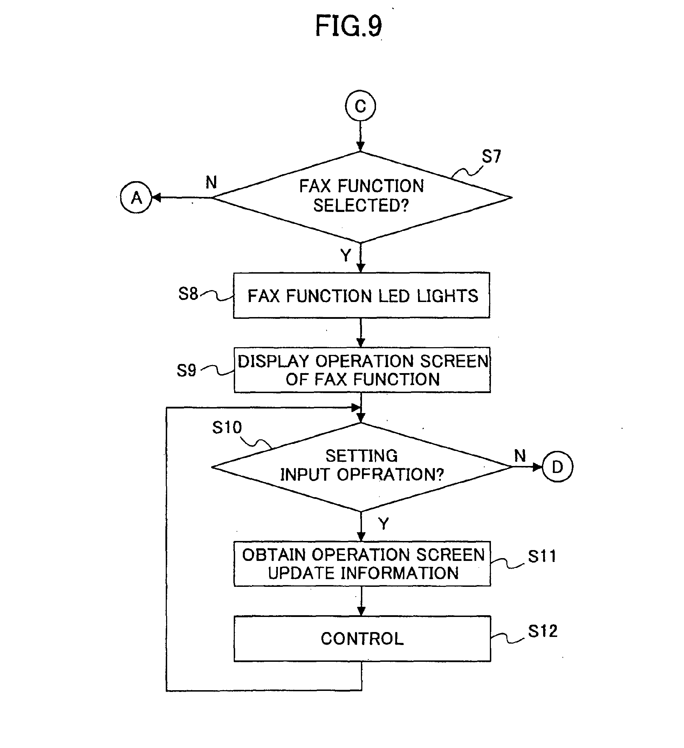

If it is determined in step 13 that the scanner function is not selected, it proceeds to step 7 of FIG. 9. Further, if it is determined in step 16 that no setting input operation is performed, it proceeds to step 19 of FIG. 11.

As shown in FIG. 9, in step 7, it is determined whether the FAX function is selected. If the FAX function is selected, in step 8, the LED indicating that the FAX function is selected lights, and in step 9, the operation screen of the FAX function is displayed. Then, in step 10, it is determined whether a setting input operation is performed on the operation screen of the FAX function.

If it is determined in step 10 that a setting input operation is performed, in step 11, the operation screen update information corresponding to the contents of the setting input operation is obtained, and a screen based on the operation screen update information is displayed. Then, in step 12, the function control corresponding to the operation is performed, and it returns to step 10.

If it is determined in step 7 that the FAX function is not selected, it returns to step 1 of FIG. 8. Further, if it is determined in step 10 that no setting input operation is performed, it proceeds to step 19 of FIG. 11.

Next, a description will be given of the processing related to claims 1, 2, 4, 5, 10, 11, 13, and 14 of the present invention and example operations and displays in the document filing system shown in FIG. 1.

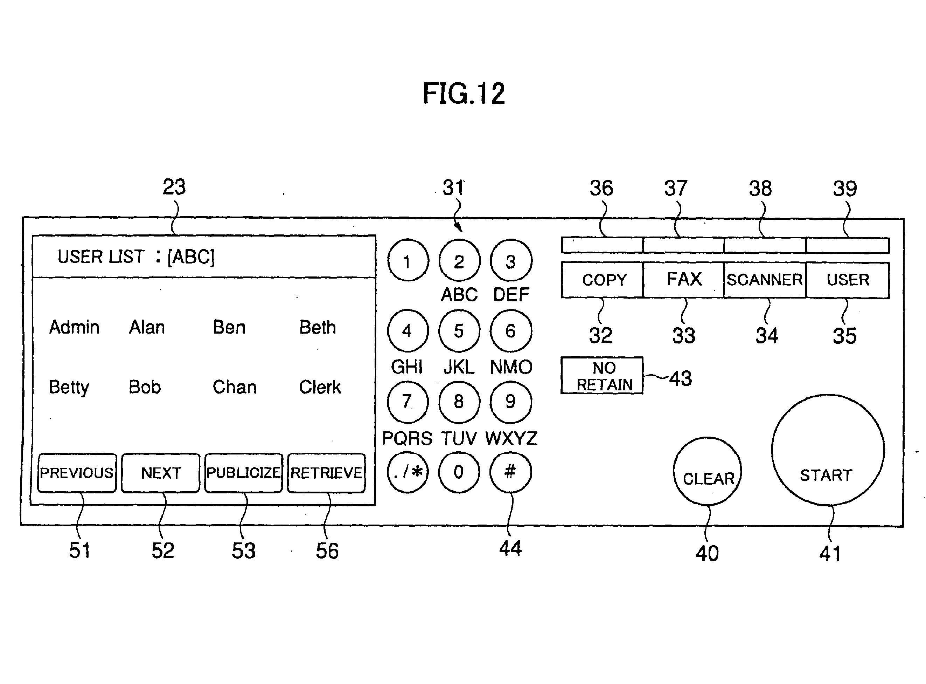

FIG. 12 is a diagram showing another version of the external appearance of the part of the display operating part 17 and the display port 23 shown in FIG. 1. The same components as those of FIG. 2 are referred to by the same numerals. In the display operating part 17 of this case, a non-retention key 43 replaces the CHECK key 42.

The non-retention key is a key to be pressed when the user refuses to store image data in the storage means.

When the MFP 1 is turned on or the user specifying screen is specified by the user specifying screen selecting key 35, the display port 23 displays a user list for specifying a user, the publicizing key 53 for specifying whether to publicize a captured document to all users, a retrieval key 56 for displaying a list of the documents whose image data remain stored in the MFP 1, the previous page key 51 for moving through the user list to the previous page, and the next page key 52 for moving through the list to the next page.

Further, when a desired one of the function selecting keys 32 through 34 is pressed after all of the desired users are selected, a list of the currently selected users is displayed on the selected user display screen as shown in FIG. 6.

When publicizing is specified, [PUBLIC] is displayed as shown in FIG. 7.

At this point, the selected users may be communicated by voice from the loudspeaker 24 in timing with the pressing of the function selecting key.

When the Exit key 55 is pressed, the operation screen of the selected function is displayed.

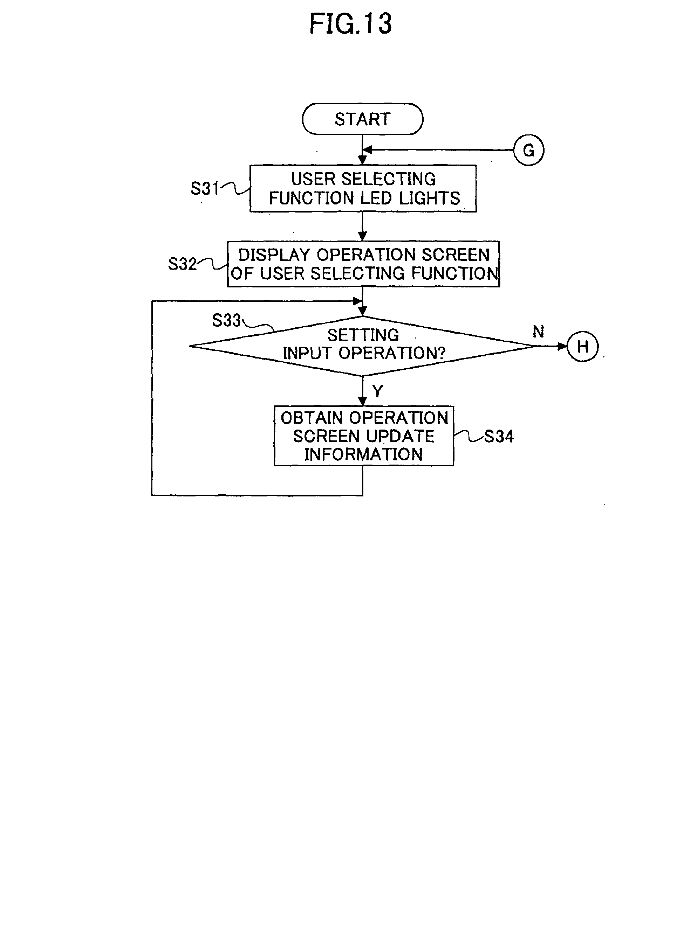

FIGS. 13 through 16 are flowcharts showing another operation of controlling the display operating part 17 by the CPU 10.

According to this operation, as shown in FIG. 13, when the user specifying screen selecting key is pressed, in step (shown by "S" in the drawings) 31, the LED indicating that the user selecting function is selected lights, and in step 32, the user specifying screen of the user selecting function is displayed.

In step 33, it is determined whether a setting input operation is performed on the user specifying screen, and if it is performed, in step 34, the operation screen update information corresponding to the contents of the setting input operation is obtained, and a screen based on the operation screen update information is displayed. Then, it returns to step 33.

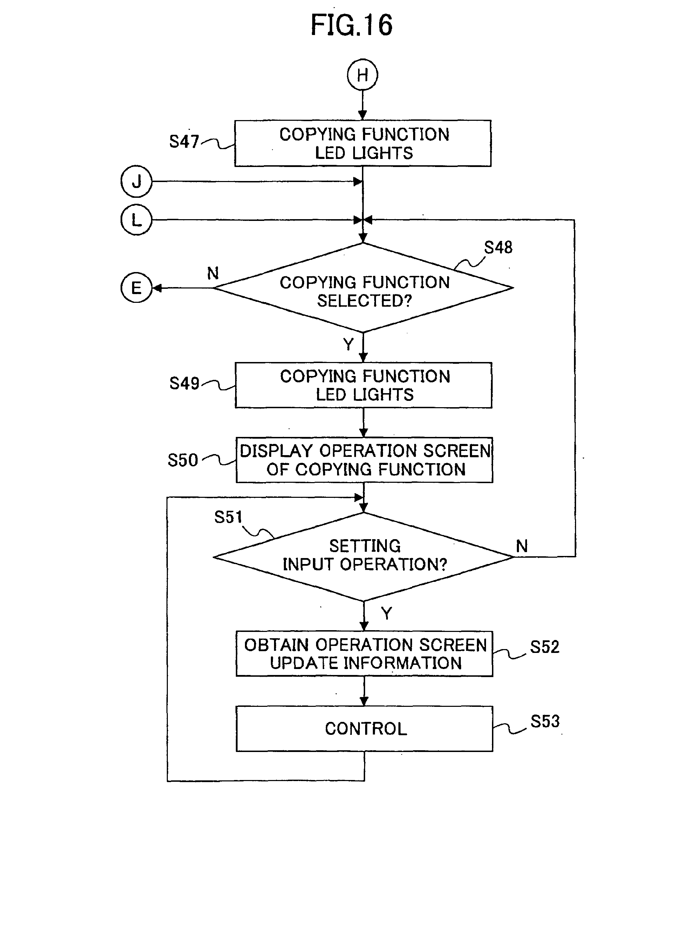

If it is determined in step 33 that no setting input operation is performed, it proceeds to step 47 of FIG. 16.

As shown in FIG. 16, in step 47, a list of the users having a selected alphabetical letter as their initials is displayed. In step 48, it is determined whether the copying function is selected. If the copying function is selected, in step 49, the LED indicating that the copying function is selected lights, and in step 50, the operation screen of the copying function is displayed. Then, in step 51, it is determined whether a setting input operation is performed on the operation screen of the copying function.

If it is determined in step 51 that a setting input operation is performed, in step 52, the operation screen update information corresponding to the contents of the setting input operation is obtained, and a screen based on the operation screen update information is displayed. Then, in step 53, the function control corresponding to the operation is performed, and it returns to step 51.

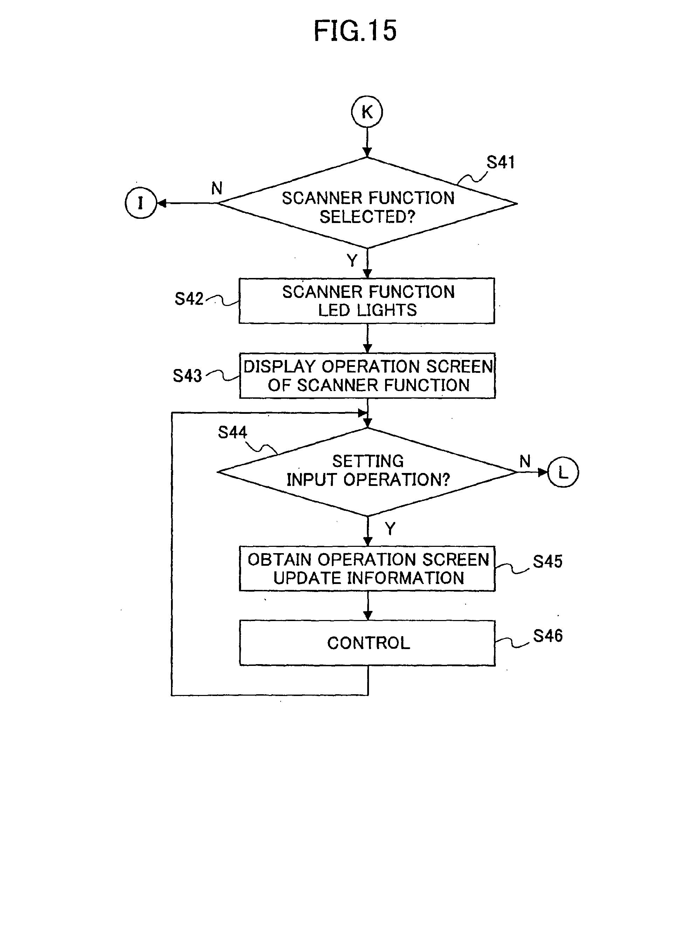

If it is determined in step 48 that the copy function is not selected, it proceeds to step 41 of FIG. 15. Further, if it is determined in step 51 that no setting input operation is performed, it returns to step 48.

As shown in FIG. 15, in step 41, it is determined whether the scanner function is selected. If the scanner function is selected, in step 42, the LED indicating that the scanner function is selected lights, and in step 43, the operation screen of the scanner function is displayed. Then, in step 44, it is determined whether a setting input operation is performed on the operation screen of the scanner function.

If it is determined in step 44 that a setting input operation is performed, in step 45, the operation screen update information corresponding to the contents of the setting input operation is obtained, and a screen based on the operation screen update information is displayed. Then, in step 46, the function control corresponding to the operation is performed, and it returns to step 44.

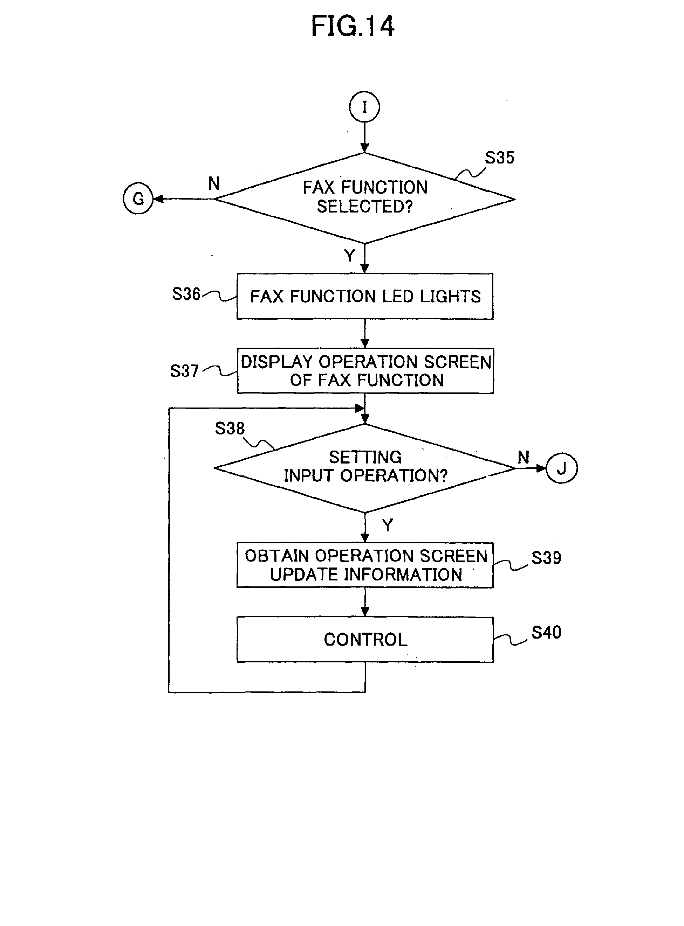

If it is determined in step 41 that the scanner function is not selected, it proceeds to step 35 of FIG. 14. Further, if it is determined in step 44 that no setting input operation is performed, it proceeds to step 48 of FIG. 16.

As shown in FIG. 14, in step 35, it is determined whether the FAX function is selected. If the FAX function is selected, in step 36, the LED indicating that the FAX function is selected lights, and in step 37, the operation screen of the FAX function is displayed. Then, in step 38, it is determined whether a setting input operation is performed on the operation screen of the FAX function.

If it is determined in step 38 that a setting input operation is performed, in step 39, the operation screen update information corresponding to the contents of the setting input operation is obtained, and a screen based on the operation screen update information is displayed. Then, in step 40, the function control corresponding to the operation is performed, and it returns to step 38.

If it is determined in step 35 that the FAX function is not selected, it returns to step 31 of FIG. 13. Further, if it is determined in step 38 that no setting input operation is performed, it proceeds to step 48 of FIG. 16.

According to the processing related to claim 1. and 10 of the present invention in the document filing system of this embodiment, on the user specifying screen, the alphanumeric keys are assigned a function for performing an initial part search using alphabetical or kana letters, so that when these keys are pressed, a list of users arranged in alphabetical or *kana* order is displayed from the corresponding searched-out positions.

Accordingly, the specifying of users can be performed quickly by the initial-part search function, so that a user can select target users quickly. Therefore, the efficiency of document capturing can be significantly increased.

Further, according to the processing related to claims 2 and 11 of the present invention in the document filing system of this embodiment, if no corresponding user exits when the initial-part search is performed by the initial-part search function on the user specifying screen, first, it is reported that no corresponding user exits, and then, the users corresponding to the alphabet or kana letters subsequent to those specified by the initial-part search are displayed.

Accordingly, since the subsequent users are displayed when no corresponding user is searched out by the initial-part search, the user can immediately understand that no searched-for user exists, and can select the subsequent users quickly. This further increases the efficiency of document capturing.

Further, according to the processing related to claims 3 and 12 of the present invention in the document filing system of this embodiment, a screen that displays a list of the users selected on the user specifying screen is provided, and the screen is switched by means for switching from the user specifying screen,thereby making it possible to confirm currently selected users. Therefore, it is possible to avoid making a mistake and an omission in selecting users.

Thus, by providing the means for switching to the screen displaying a list of selected users, the selected user can be confirmed with ease, thereby preventing wrong user information from being added to document data and a desired user from being omitted from selection. Therefore, the reliability of document capturing and storing in the document filing system can be increased.

Further, according to the processing related to claim 4 and 13 of the present invention in the document filing system of this embodiment, without providing dedicated means for switching to the screen displaying a list of the users selected on the user specifying screen, the list of the selected users is displayed when the user specifying screen is switched to the copying function, the document transmitting function, or the document reading function. Therefore, the users selected based on the displayed list of the selected users can be confirmed easily, so that wrong user information is prevented from being added to document data and a desired user is prevented from being omitted from selection. Therefore, the reliability of document capturing and the document filing system can be increased.

Further, according to the processing related to claim 5 and 14 of the present invention in the document filing system of this embodiment, the list of the selected users is communicated by voice in timing with the switching of the screens. This makes recognition easier than visual notification, so that a mistake and an omission can be found easily in the selection of users. Therefore, the reliability of document capturing and the document filing system can be increased.

Next, a description will be given of the processing related to claims 6 through 9 and 15 through 18 of the present invention and example operations and displays in the document filing system shown in FIG. 1.

First, a description will be given briefly of a document capturing operation.

As shown in FIG. 12, the alphanumeric keys 31 show the alphabet as well as numbers. Here, for simplification of description, a description will be given of the case of the alphabet, but the same applies to the case of the *kana*.

When the key of 2 of the alphanumeric keys 31 is pressed, for instance, an instruction to perform an initial-part search on the user names for those starting with A, B, or C of the alphabet is input. When a user touches a user name that the user desires to select on the user specifying screen of the display port 23, the user name is highlighted and selected. When the function selecting keys are pressed in this state, the operation screens of the respective functions are displayed, and the document processed by the selected function is stored with the set user information being added thereto.

Next, a description will be given of the reuse processing related to claims 6 and 15 of the present invention and example operations and displays in the document filing system shown in FIG. 1.

In this processing, on the user specifying screen, a list of the documents of the image data currently stored in the hard disk unit 13 that is a secondary storage device in the MFP 1 is displayed when the retrieval key 56 is touched.

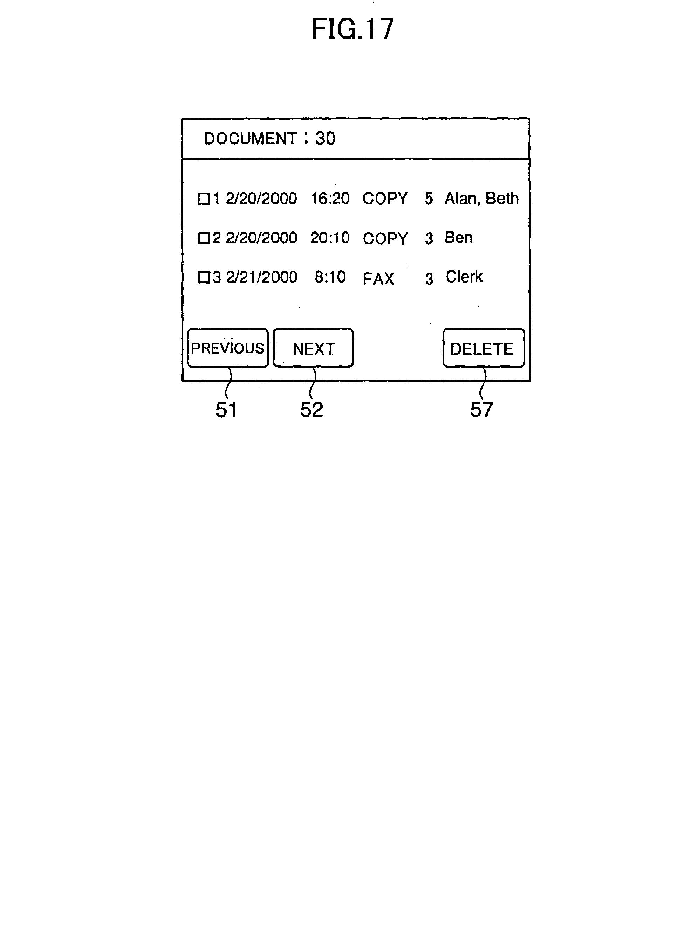

First, as shown in FIG. 17, on the list display screen, the total number of documents "DOCUMENT: 30" of the image data stored in the hard disk unit 13 inside the MFP 1 is displayed, and information such as date and time of processing, the contents of processing, the number of copies, and user name is displayed with respect to each document.

Further, on the list display screen, the next page key 52 for moving through the document list to the next page, the previous page key 51 for moving through the document list to the previous page, and a delete key 57 for deleting a selected document are displayed.

Furthermore, when the copying function or the FAX function is selected by pressing the corresponding function selecting key on the list display screen with one or a plurality of documents being selected by a function such as a touch panel, the desired processing is performed on the previously selected documents.

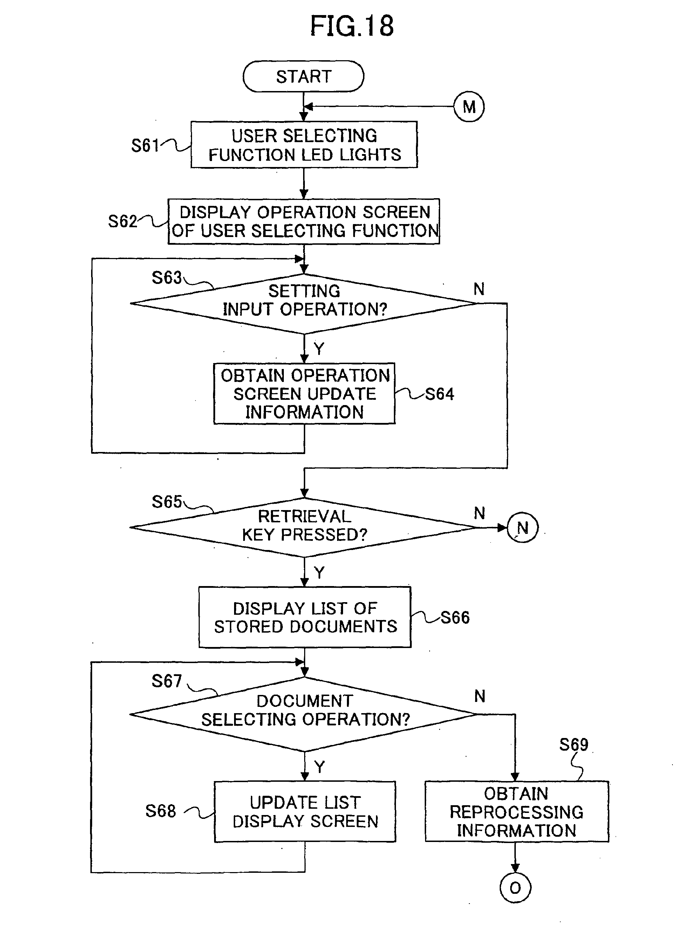

FIGS. 18 through 22 are flowcharts showing yet another operation of controlling the display operating part 17 by the CPU 10.

According to this operation, as shown in FIG. 18, when the user specifying screen selecting key is pressed, in step (shown by "S" in the drawings) 61, the LED indicating that the user selecting function is selected lights, and in step 62, the user specifying screen of the user selecting function is displayed.

In step 63, it is determined whether a setting input operation is performed on the user specifying screen, and if it is performed, in step 64, the operation screen update information corresponding to the contents of the setting input operation is obtained, and a screen based on the operation screen update information is displayed. Then, it returns to step 63.

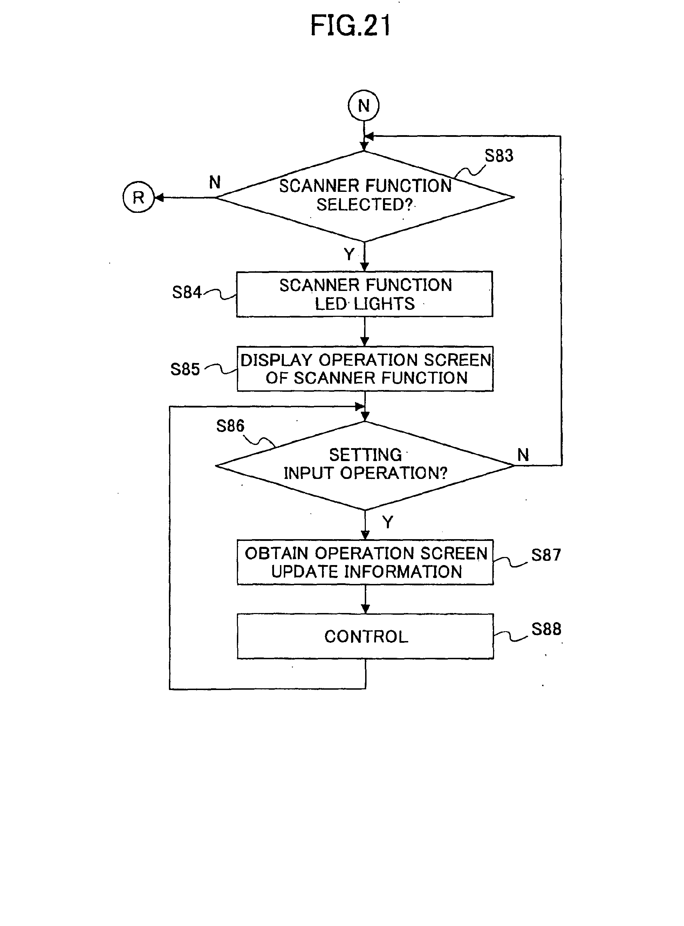

If it is determined in step 63 that no setting input operation is performed, in step 65, it is determined whether the retrieval key is pressed. If the retrieval key is not pressed, it proceeds to step 83 of FIG. 21. If it is pressed, in step 66, a list of the documents of the image data stored in the document capturing device is displayed. In step 67, it is determined whether an operation of selecting a document from the list of the documents is performed.

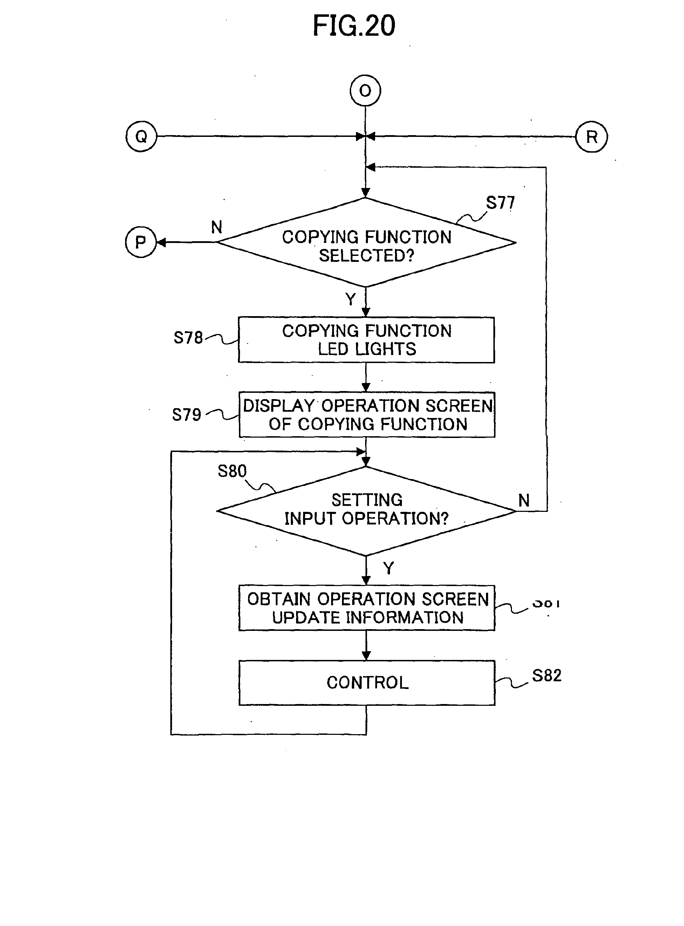

If it is determined in step 67 that the document selecting operation is performed, in step 68, the list display screen is updated, and it returns to step 67. If the document selecting operation is not performed, in step 69, reprocessing information is obtained, and it proceeds to step 77 of FIG. 20.

As shown in FIG. 21, in step 83, it is determined whether the scanner function is selected. If the scanner function is selected, in step 84, the LED indicating that the scanner function is selected lights, and in step 85, the operation screen of the scanner function is displayed. Then, in step 86, it is determined whether a setting input operation is performed on the operation screen of the scanner function.

If it is determined in step 86 that a setting input operation is performed, in step 87, the operation screen update information corresponding to the contents of the setting input operation is obtained, and a screen based on the operation screen update information is displayed. Then, in step 88, the function control corresponding to the operation is performed, and it returns to step 86. If it is determined in step 83 that the scanner function is not selected, it proceeds to step 77 of FIG. 20.

As shown in FIG. 20, in step 77, it is determined whether the copying function is selected. If the copying function is selected, in step 78, the LED indicating that the copying function is selected lights, and in step 79, the operation screen of the copying function is displayed. Then, in step 80, it is determined whether a setting input operation is performed on the operation screen of the copying function.

If it is determined in step 80 that a setting input operation is performed, in step 81, the operation screen update information corresponding to the contents of the setting input operation is obtained, and a screen based on the operation screen update information is displayed. Then, in step 82, the function control corresponding to the operation is performed, and it returns to step 80.

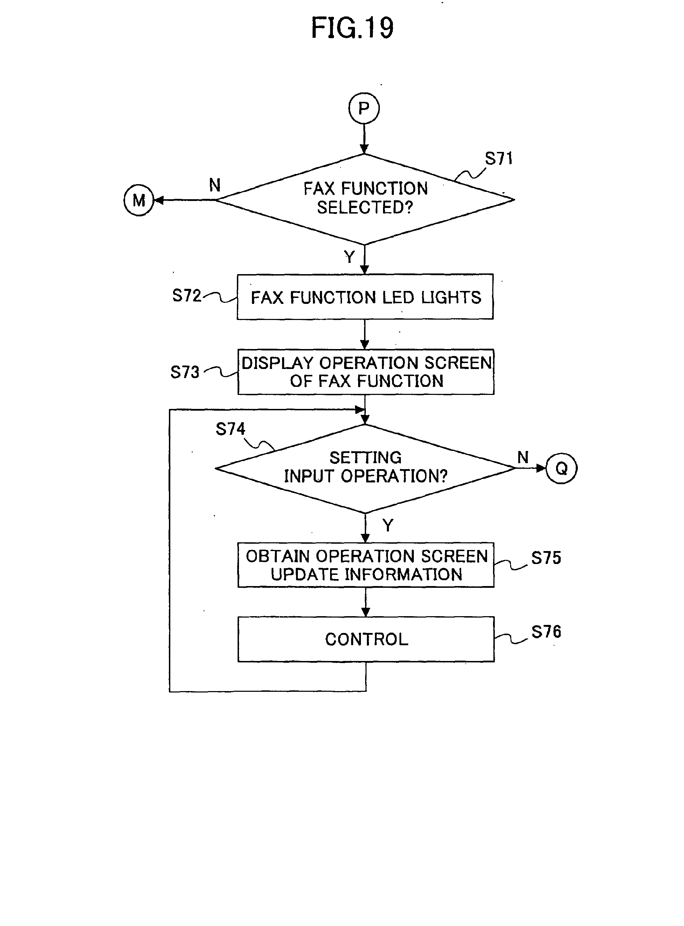

If it is determined in step 77 that the copying function is not selected, it proceeds to step 71 of FIG. 19.

As shown in FIG. 19, in step 71, it is determined whether the FAX function is selected. If the FAX function is selected, in step 72, the LED indicating that the FAX function is selected lights,. and in step 73, the operation screen of the FAX function is displayed. Then, in step 74, it is determined whether a setting input operation is performed on the operation screen of the FAX function.

If it is determined in step 74 that a setting input operation is performed, in step 75, the operation screen update information corresponding to the contents of the setting input operation is obtained, and a screen based on the operation screen update information is displayed. Then, in step 76, the function control corresponding to the operation is performed, and it returns to step 74.

If it is determined in step 71 that the FAX function is not selected, it returns to step 61 of FIG. 18. Further, if it is determined in step 74 that no setting input operation is performed, it proceeds to step 77 of FIG. 20.

Next, a description will be given of the reuse proceeding related to claims 7 and 16 of the present invention and example operations and displays in the document filing system shown in FIG. 1.

In this processing, on the user specifying screen, when the retrieval key 56 is pressed with one or a plurality of users are touched and selected, of the documents currently stored in the hard disk unit 13 inside the MFP 1, only the documents to which the user information of the selected user is added are displayed in a list.

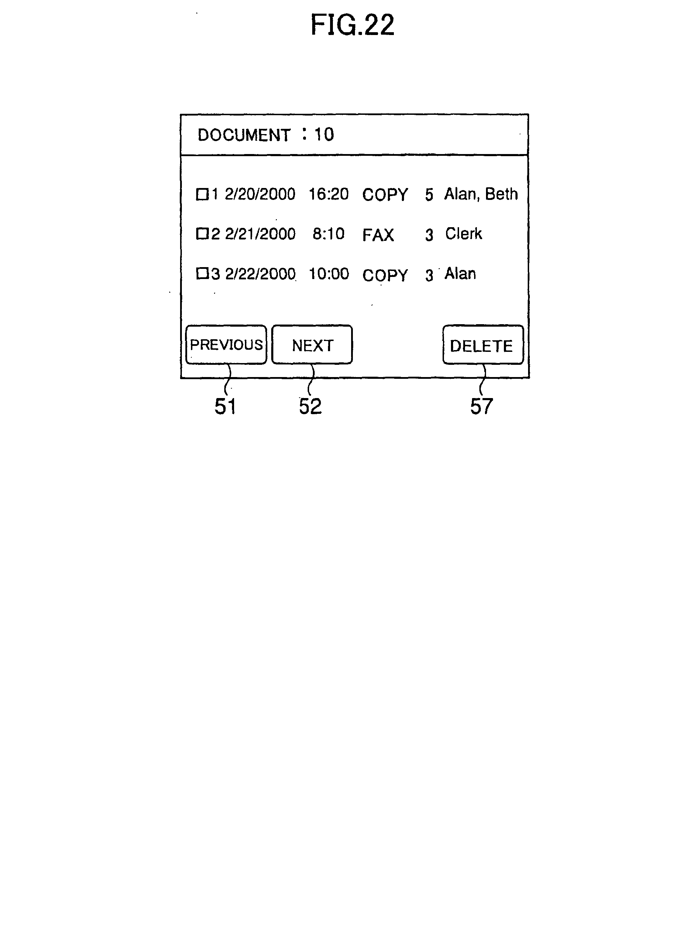

First, as shown in FIG. 22, on the list display screen, of the documents of the image data stored in the hard disk unit 13 inside the MFP 1, the total number of those to which the user information of the specified users "DOCUMENT: 10" is displayed, and information such as date and time of processing, the contents of processing, the number of copies, and user name is displayed with respect to each document.

Further, on the list display screen, the next page key 52 for moving through the document' list to the next page, the previous page key 51 for moving through the document list to the previous page, and the delete key 57 for deleting a selected document are displayed as previously described.

Furthermore, when the copying function or the FAX function is selected by pressing the corresponding function selecting key on the list display screen with one or a plurality of documents being selected by a function such as a touch panel, the desired processing is performed on the previously selected documents.

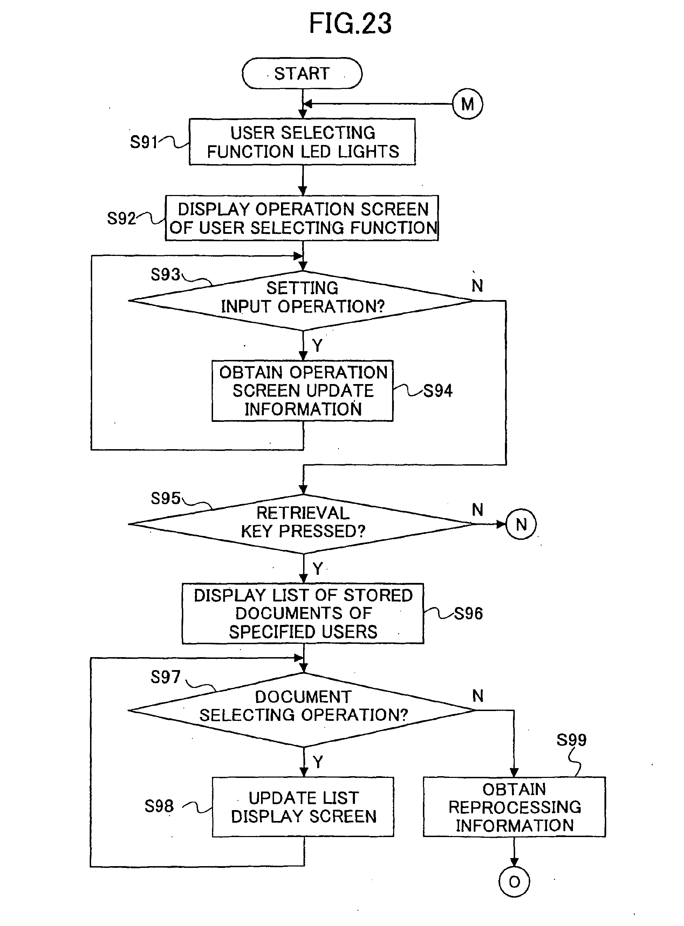

FIG. 23 is a flowchart showing yet another operation of controlling the display operating part 17 by the CPU 10.

According to this operation, as shown in FIG. 23, when the user specifying screen selecting key is pressed, in step (shown by "S" in the drawings) 91, the LED indicating that the user selecting function is selected lights, and in step 92, the user specifying screen of the user selecting function is displayed.

In step 93, it is determined whether a setting input operation is performed on the user specifying screen, and if it is performed, in step 94, the operation screen update information corresponding to the contents of the setting input operation is obtained, and a screen based on the operation screen update information is displayed. Then, it returns to step 93.

If it is determined in step 93 that no setting input operation is performed, in step 95, it is determined whether the retrieval key is pressed. If the retrieval key is not pressed, it proceeds to step 83 of FIG. 21. If it is pressed, in step 96, the stored documents of the specified users of the documents of the image data stored in the document capturing device are displayed in a list. In step 97, it is determined whether an operation of selecting a document from the list of the documents is performed.

If it is determined in step 97 that the document selecting operation is performed, in step 98, the list display screen is updated, and it returns to step 97. If the document selecting operation is not performed, in step 99, reprocessing information is obtained, and it proceeds to step 77 of FIG. 20.

Next, a description will be given of the reuse processing related to claims 8 and 17 of the present invention and example operations and displays in the document filing system shown in FIG. 1.

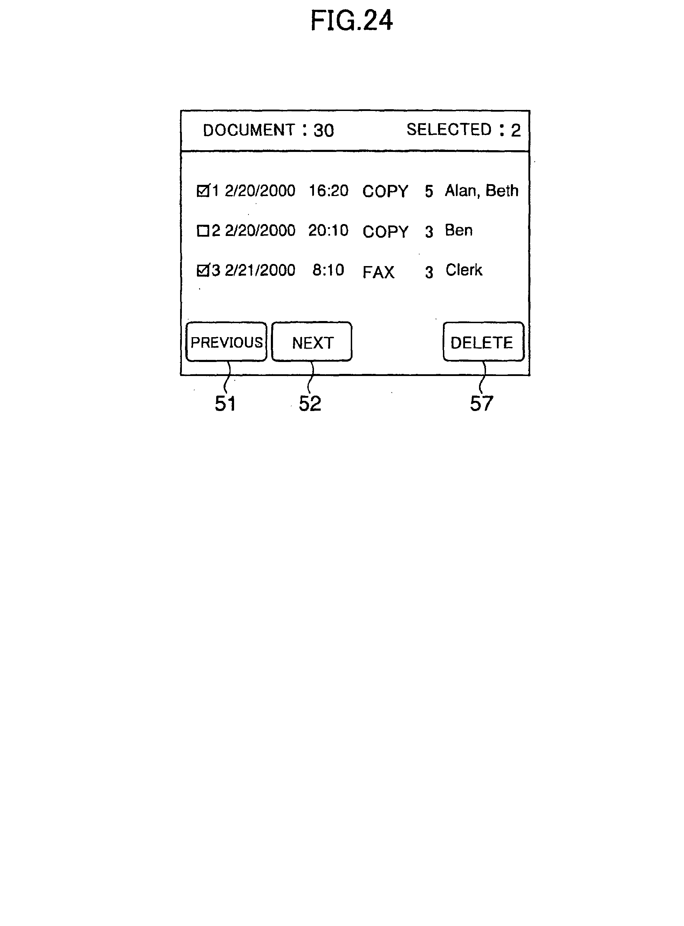

According to this operation, as shown in FIG. 24, on the list display screen, when the delete key 57 is pressed with one or a plurality of documents being selected, the image data of the selected documents are deleted from the hard disk unit 13 inside the MFP 1, and thereafter, are also prevented from being stored via the network I/F 20 in the file device 3 that is storage means.

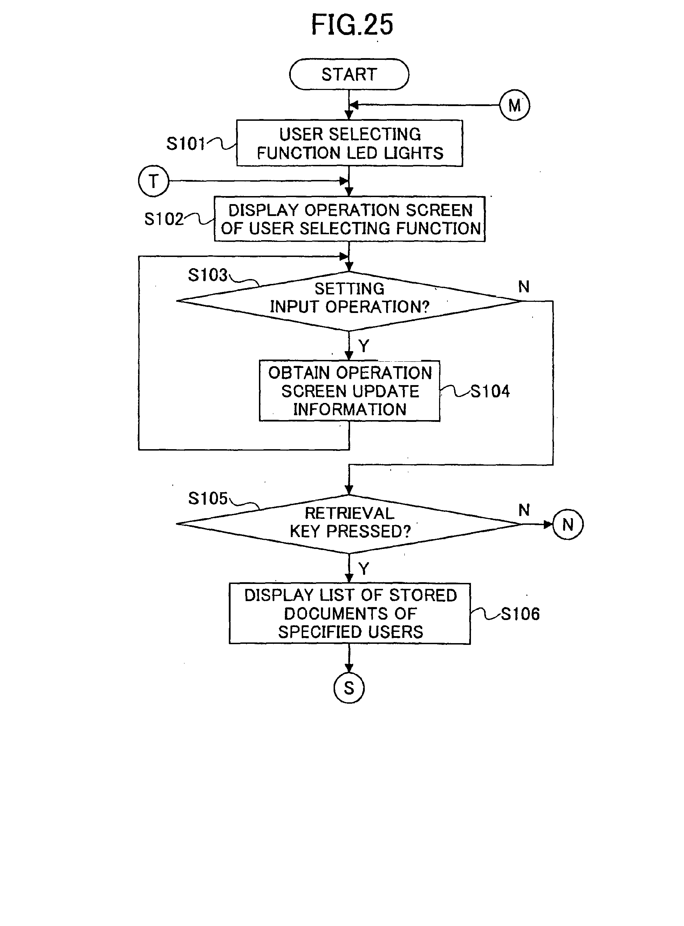

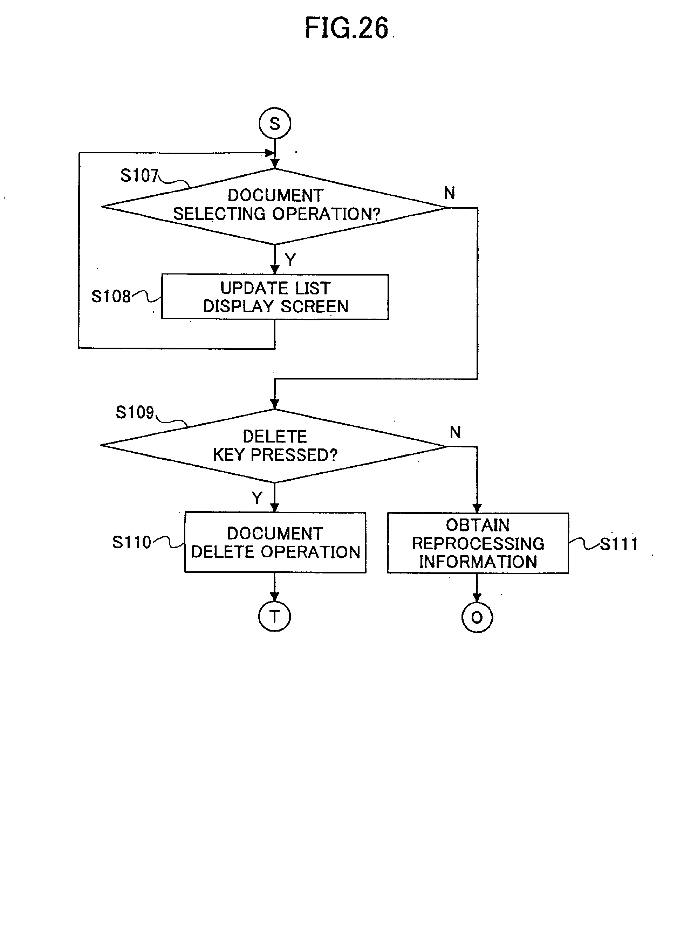

FIGS. 25 and 26 are flowcharts showing yet another operation of controlling the display operating part 17 by the CPU 10.

According to this operation, as shown in FIG. 25, when the user specifying screen selecting key is pressed, in step (shown by "S" in the drawings) 101, the LED indicating that the user selecting function is selected lights, and in step 102, the user specifying screen of the user selecting function is displayed.

In step 103, it is determined whether a setting input operation is performed on the user specifying screen, and if it is performed, in step 104, the operation screen update information corresponding to the contents of the setting input operation is obtained, and a screen based on the operation screen update information is displayed. Then, it returns to step 103.

If it is determined in step 103 that no setting input operation is performed, in step 105, it is determined whether the retrieval key is pressed. If the retrieval key is not pressed, it proceeds to step 83 of FIG. 21. If it is pressed, in step 106, the stored documents of the specified users of the documents of the image data stored in the document capturing device are displayed in a list. In step 107 of FIG. 26, it is determined whether an operation of selecting a document from the list of the documents is performed.

If it is determined in step 10.7 that the document selecting operation is performed, in step 108, the list display screen is updated, and it returns to step 107. If the document selecting operation is not performed, in step 109, it is determined whether the delete key is pressed. If the delete key is pressed, in step 110, a document delete operation of deleting the selected documents is performed, and it returns to step 102 of FIG. 25.

If it is determined in step 109 that the delete key is not pressed, in step 111, reprocessing information is obtained, and it proceeds to step 77 of FIG. 20.

Next, a description will be given of the reuse processing related to claims 9 and 18 of the present invention and example operations and displays in the document filing system shown in FIG. 1.

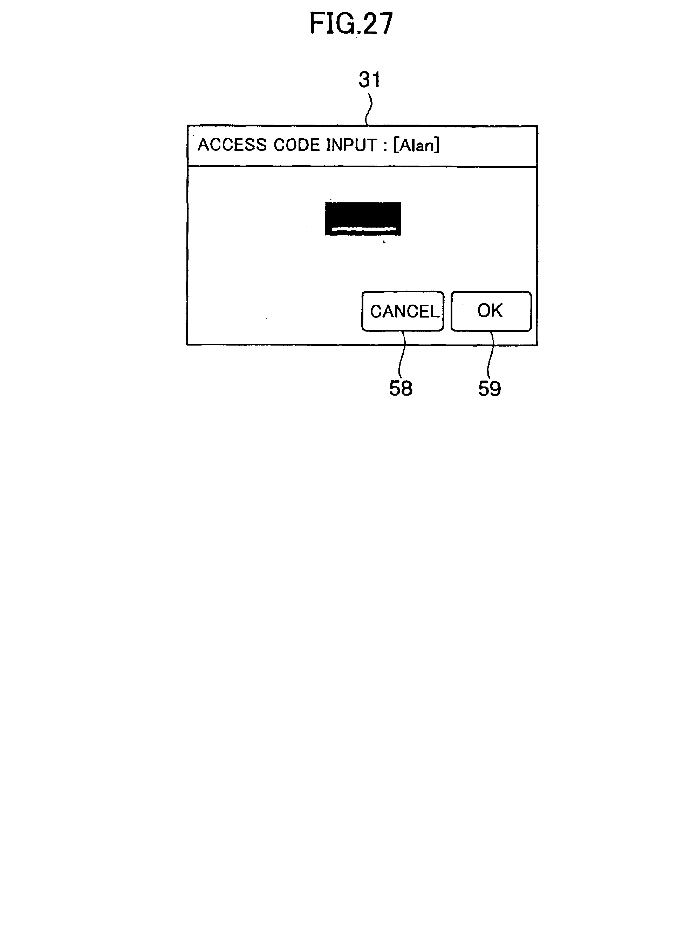

According to this processing, when a user is selected and the retrieval key 56 is pressed on the user specifying screen, only if the specified user has a preset access code, an access code entry screen for entering the access code is displayed as shown in FIG. 27.

When the access code is entered using the alphanumeric keys 31 and an OK key 59 is pressed, it is determined whether the entered access code is identical to the set access code. Only when it is identical, the list display screen is displayed.

The access code may be set on the server side in the file device 3 that is storage means or set using the alphanumeric keys 31 on the touch panel of the MFP 1.

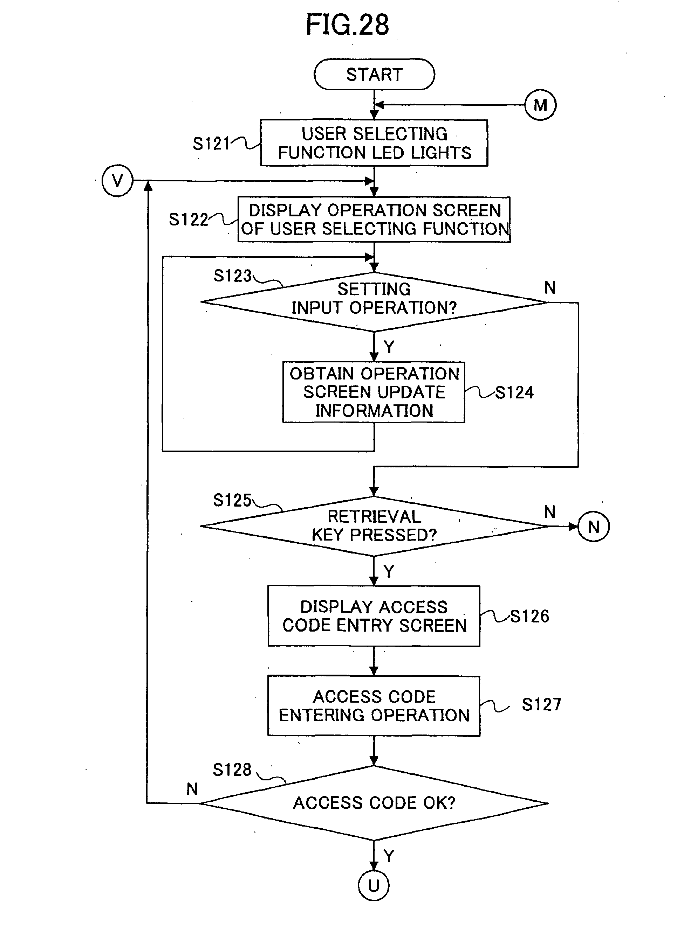

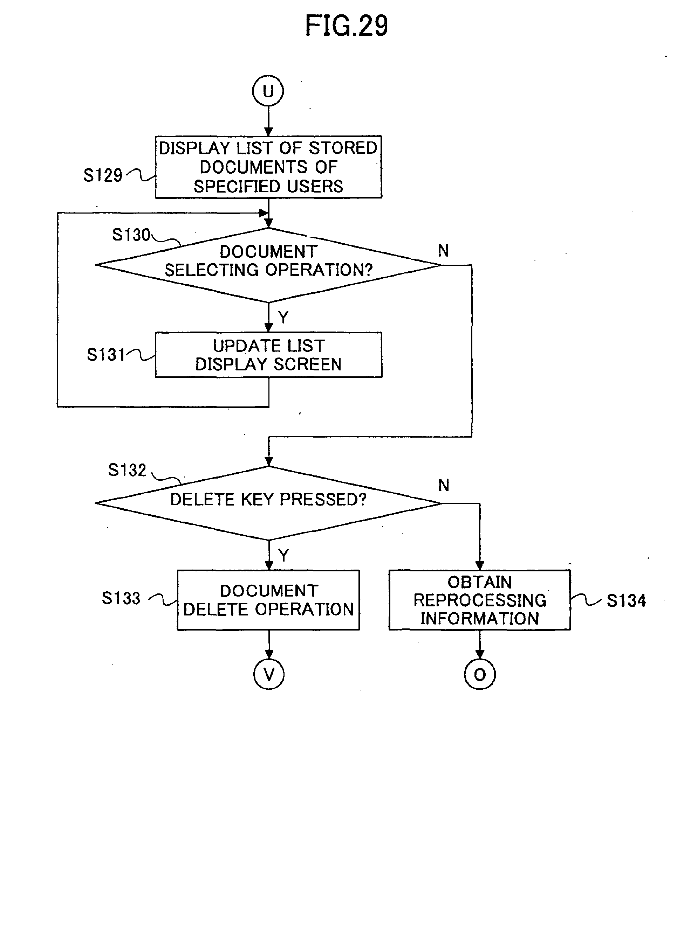

FIGS. 28 and 29 are flowcharts showing yet another operation of controlling the display operating part 17 by the CPU 10.

According to this operation, as shown in FIG. 28, when the user specifying screen selecting key is pressed, in step (shown by "S" in the drawings) 121, the LED indicating that the user selecting function is selected lights, and in step 122, the user specifying screen of the user selecting function is displayed.

In step 123, it is determined whether a setting input operation is performed on the user specifying screen, and if it is performed, in step 124, the operation screen update information corresponding to the contents of the setting input operation is obtained, and a screen based on the operation screen update information is displayed. Then, it returns to step 123.

If it is determined in step 123 that no setting input operation is performed, in step 125, it is determined whether the retrieval key is pressed. If the retrieval key is not pressed, it proceeds to step 83 of FIG. 21. If it is pressed, in step 126, the access code entry screen is displayed. If an access code is entered in step 127, in step 128, it is determined whether the entered access code is OK (correct). If it is not OK, it returns to step 122, and if it is OK, it proceeds to step 129 of FIG. 29.

In step 129, the stored documents of the specified users of the documents of the image data stored in the document capturing device are displayed in a list. In step 130, it is determined whether an operation of selecting a document from the list of the documents is performed.

If it is determined in step 130 that the document selecting operation is performed, in step 131, the list display screen is updated, and it returns to step 130. If the document selecting operation is not performed, in step 132, it is determined whether the delete key is pressed. If the delete key is pressed, in step 133, a document delete operation of deleting the selected documents is performed, and it returns to step 122 of FIG. 28.

If it is determined in step 132 that the delete key is not pressed, in step 134, reprocessing information is obtained, and it proceeds to step 77 of FIG. 20.

According to the processing related to claims 6 and 15 of the present invention in the document filing system of this embodiment, the documents remaining stored in the hard disk unit inside the document capturing device are displayed in a list by pressing the retrieval key on the user specifying screen. Additional information such as time of processing, processing function, the number of copies processed, and user information is displayed together with the documents, thus allowing a user to distinguish between the documents.

A document desired to be reprocessed is selected by a function such as a touch panel and reprocessed using the copying function or the document transmitting function of the document capturing device. Thereby, the user can distinguish between and reprocess the documents that remain stored in the document capturing device without being transferred to the server due to network error.

Since the documents that remain stored in the document capturing device due to the occurrence of network error can be retrieved and reprocessed as described above, the efficiency of document reusing of the document filing system can be increased.

Further, according to the processing related to claims 7 and 16 of the present invention in the document filing system of this embodiment, by selecting one or a plurality of users and pressing the retrieval key on the user specifying screen, of the documents remaining stored in the hard disk unit inside the document capturing device, only the documents to which the user information of the selected users is added are displayed in a list.

These documents are displayed together with additional information such as time of processing, processing function, the number of copies processed, and user information. Therefore, the user can distinguish between the documents. Further, a document desired to be reprocessed is selected by a function such as a touch panel and reprocessed using the copying function or the document transmitting function of the document capturing device. Therefore, of the documents that remain stored in the document capturing device without being transferred to the server due to network error, the user can distinguish between documents and reprocess a document to which specific user information is added.

Thus, of the documents remaining stored in the document capturing device due to the occurrence of network error, those having specific user information can be retrieved and reprocessed. Therefore, the efficiency of document reusing of the document filing system can be further increased.

Further, according to the processing related to claims 8 and 17 of the present invention in the document capturing device of this embodiment, when one or a plurality of the documents remaining stored in the hard disk unit inside the document capturing device which documents are displayed on the list display screen are selected by a function such as a touch panel, and the delete key is pressed, the selected documents are deleted from the hard disk unit. Therefore, a desired one of the documents remaining untransferred to the server due to network error can be identified and deleted from the document capturing device.

Thus, the documents remaining stored in the document capturing device due to the occurrence of network error can be retrieved and deleted. Therefore, the efficiency of document storing of the document filing system can be increased.

Furthermore, according to the processing related to claims 9 and 18 of the present invention in the document filing system of this embodiment, when a user is selected and the retrieval key is pressed on the user specifying screen and if the specified user has a preset special access code, a screen prompting the access code to be entered is displayed.

When the access code is entered using the alphanumeric keys and if the access code is incorrect, no list is displayed. Therefore, the user can prevent other users from reprocessing or deleting the processed document of her/his own, so that the security of the filing system can be increased.

Thus, in retrieving and reprocessing a document having specific user information, other users can be prevented from accessing the documents remaining stored in the document capturing device due to the occurrence of network error. Therefore, the security of the document filing system can be increased.

Thus, the document capturing device and the document capturing system according to the present invention are described based on the embodiment. The present invention, however, is not limited to the above-described embodiment.

In the above-described embodiment, for instance, the documents stored locally in the document capturing device are deleted by an explicit instruction from a user. Alternatively, the data may be transferred automatically to the network after the file server or the network recovers from failure, and when the data transfer to the network is successfully completed, the transferred document data may be automatically deleted. In order to realize automatic data transfer after recovery from failure, such a configuration may be set that data transfer is re-performed after the passage of a predetermined period of time since the detection of transfer failure due to failure in the file server or the network. Alternatively, the file server may, upon recovery, transmit a notification to the document capturing device, and the document data may be transferred immediately in response to the notification.

The reprocessing function to the documents stored locally in the document capturing device may be used not only in the case of failure in the file server or the network. The reprocessing function may also be used on the document data stored locally in the document capturing device in the state before transfer with the time to transfer the document data to the server being specified in advance. In this case, when the data transfer to the server is completed at the specified time, the document data may be deleted from a local storage device inside the document capturing device.

Alternatively, such a configuration is also possible that the document data are transferred to the server immediately after their acquisition, while the document data are also stored locally in the document capturing device for a predetermined period of time so that the document data may be reprocessed. In this case, when the data transfer to the server is completed after the passage of the predetermined period of time, the document data may be deleted from a local storage device inside the document capturing device.

A description will be given, with reference to the accompanying drawings, of embodiments of the electronic document certificating system of the present invention.

According to the present invention, an electronic document automatic storing apparatus having an input device and an output device is provided with the function of incorporating information such as date and time of creation and copyright into an electronic document by digital watermarking.

In this configuration, an object of certification by digital watermarking includes not only an electronic document whose original form is electronic data, but also a document converted from the original form of printed matter into electronic data through an input device in daily operations.

Thereby, in creating and using not only an electronic document whose original form is electronic data, but also an electronic document obtained by capturing a printed document by an input device, their registration can be performed automatically, thereby saving a user the trouble of judging the necessity of registration of each document and performing a registration operation.

A basic electronic document storing and managing system is composed of a data acquisition device (input device) acquiring an electronic document, such as a scanner, a storage device storing the data, a DBMS (database management system) retrieving and managing the stored data, and a display operating device requesting retrieval and performing display. The acquisition device includes not only an image input device such as a scanner, but also a printer, a facsimile machine, a copier, and an electronic blackboard. The devices such as a printer, a facsimile machine, a copier, and an electronic blackboard function, even in the case of outputting a printed document, as input devices that can obtain an electronic document to be certified by storing the image data to be output as the printed document in memory without discarding the image data. Thereby, printed material captured by a scanner, copied printed material, printed material (or its original electronic data) printed by a printer, and printed material or electronic data transmitted or received by FAX can be automatically registered as electronic documents to be certified. Further, voice and electronic information of telephone and e-mail may be considered as an electronic document to be certified, and digitized as required to be stored as an object of certification.

In the following, a description will be given of a system configured mainly of a digital copier (multifunctional peripheral) having the printer, scanner, and FAX functions as an example.

In such an electronic document storing and managing system, a printer or a scanner functions as an acquisition device acquiring data. Further, in the configuration where a multifunction peripheral is connected via a network to a file server, the file server functions as a storage device storing data. A client PC is connected to the network so as to be able to perform the operations of transmitting a request for retrieval to the file server and displaying received data. The file server can perform retrieval at the retrieval request of the client PC and transfer data on the retrieval results to the client PC.

If the acquisition device is a scanner, electronic data obtained by scanning is an electronic document to be stored. For instance, in the case of copying printed material by the copying function, that is, in the case of scanning and printing printed material, electronic data obtained by scanning is also an electronic document to be stored. Further, in the case of using only the printer function, binary information at the time of forming and printing an image is an electronic document to be stored as bitmap-type electronic data. At this time, the image may be a multi-level image instead of a binary image, and be in an image format other than the bitmap format.

In the case of storing the electronic data obtained from those acquisition devices in the storage device such as a file server, the acquisition devices or the file server stores the electronic data, adding thereto appendant information (for instance, information on date and time of acquisition) obtained simultaneously with the acquisition of the electronic data by the acquisition devices or the file server.

At this point, preferably, a digital watermark is added. For instance, time information is expressed as a text character string of 14 positions of YYYYMMDDHHMMSS (year, month, day, hour, minute, and second) based on GMT (Greenwich Mean Time), and "F" indicating the start or end of information is attached to each of the head and the tail of the character string, thereby acquiring a text character string of 16 positions. When each position is expressed by four bits, the information has 64 bits in total. The image data to be certified is divided into a plurality of small image blocks, and each block is assigned a bit, thereby embedding the 64-bit information in the image data. The 64-bit information is superimposed on the image information as noise. The thus acquired image data with the time information buried therein is stored in the storage device such as a hard disk.

The above-described embedding method has the disadvantages that it is relatively easy to falsify watermark information and that there is significant degradation of image quality because the watermark information is superimposed on image information as noise. In order to compensate for this, the watermark information may be superimposed on a specific frequency or a specific frequency region in frequency components obtained by changing the frequency of an image.

When it is necessary to read out the watermark information, the noise information is extracted from the image to be converted to the time information. Thus, by reading out the appendant information of the data, such as date and time, by a digital watermark reading function as required, the date and time of creation of the document is certified.

The appendant information may be converted to an index in a table format, paired with the ID of the image information, by a stored data management function without using digital watermarking. The ID of the image information may include the name of a device in which it is stored and the name of a directory.

Further, the appendant information may include the serial number of an input/output device and information necessary to protect copyright, such as a user name, if recognizable.

By this function, a user is saved from consciously capturing a document for the purpose of its registration, and all documents can be automatically stored and retained with information on the date and time of their creation.

Further, the display operating device may specify date and time as a request for retrieval, and the storage device such as a file server may retrieve the image information corresponding to the date and time by a retrieval function and transmit the image data to the display operating device by the stored data management function. The display operating device receives and displays the image data as the retrieval result.

When the electronic document storing and managing system is connected to a network, the built-in clock of a device having a date and time setting function is set to the exact date and time by constantly accessing a reliable NTP (network time protocol) or SNTP (simple network time protocol) server. In the case of the absence of an appropriate server, it is set to the exact time using a method such as a wave clock.

An expatiation will be given below of the configurations and the operations of embodiments of the electronic document certificating system.

### (1) First Embodiment

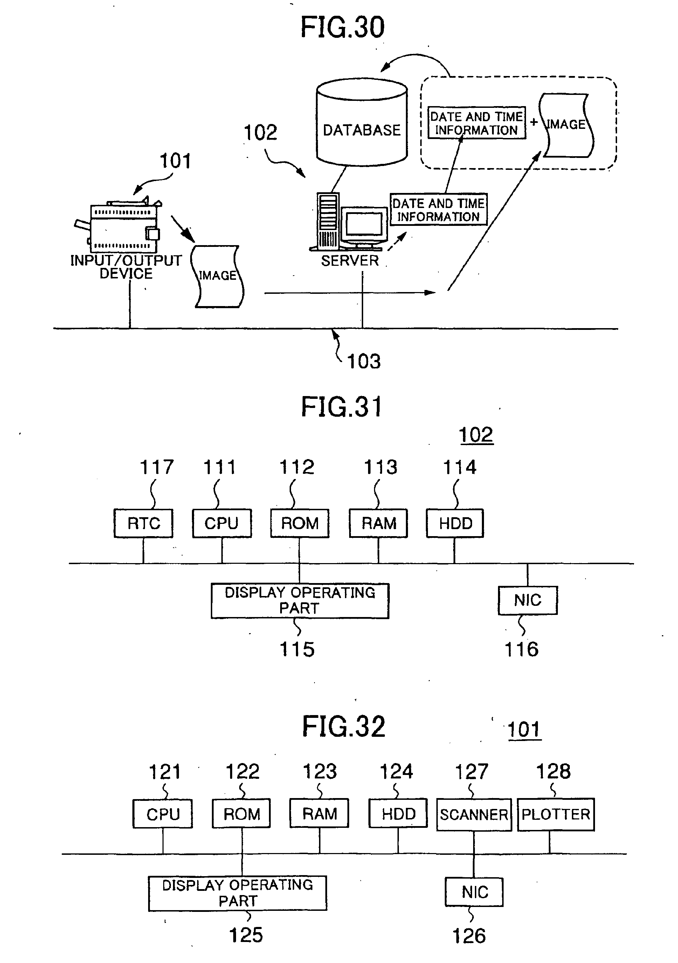

FIG. 30 is a diagram showing a first embodiment of the electronic document certificating system according to the present invention.

The electronic document certificating system of FIG. 30 includes an input/output device 101, a server 102, and a network 103. The input/output device 101 and the server 102 are connected via the network 103.

FIG. 31 is a diagram showing a configuration of the server 102.

The server 102 includes a CPU 111, a ROM 112, a RAM 113, an HDD 114, a display operating part 115, an NIC 116, and an RTC 117. The CPU 111 operates based on a basic program stored in the ROM 112 and a program loaded from the HDD 114 into the RAM 113, and uses the RAM 113 as a work memory space. The CPU 111 reads out data to be processed from the RAM 113 and processes it. The CPU 111 stores the processed data in the RAM 113. The HDD 114 stores data and programs. The display operating part 115 includes input devices such as a keyboard and a mouse and a display unit, and is used for operating the server 102 and displaying data. The NIC 116 is a network interface and connected to the network 103 so as to communicate with the input/output device 101. The RTC 117 is a real-time clock, and generates time information indicating the present time.

FIG. 32 is a diagram showing a configuration of the input/output device 101.

The input/output device 101 includes a CPU 121, a ROM 122, a RAM 123, an HDD 124, a display operating part 125, an NIC 126, a scanner 127, and a plotter 128. The CPU 121, the ROM 122, the RAM 123, and the HDD 124 function and operate in the same way as the corresponding components of the server 102. The display operating part 125 is an operation panel provided to the input/output device 101 and used for operating the input/output device 101 and displaying data. The NIC 126 is a network interface and connected to the network 103 so as to communicate with the server 102. The scanner 127 is used in the case of scanning printed material and capturing it as electronic data or in the case of copying printed material. The plotter 128 is used in the case of printing an electronic document generated by a personal PC or in the case of copying printed material.

The input/output device 101 may be an MFP as shown in FIG. 1.

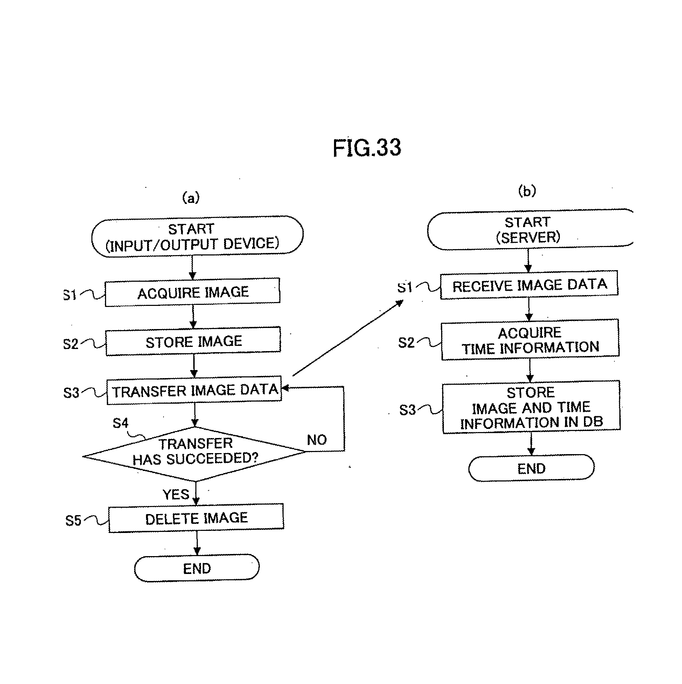

FIG. 33 is a flowchart showing the operation of the first embodiment of the electronic document certifying system according to the present invention. In FIG. 33, (a) shows the operation flow on the input/output device 101 side, and (b) shows the operation flow on the server 102 side.

In step S1 of FIG. 33(a), the input/output device 101 acquires image information. As previously described, this corresponds, for instance, to the case of capturing printed material as electronic data using the scanner provided in the input/output device 101, the case of using the copying function of printing the printed material read by the scanner from the plotter, the case of transmitting or receiving the printed material or the electronic data using the facsimile function, or the case of using the printer function of printing the electronic data from the plotter.

In step S2, the image information is stored in the input/output device 101. That is, the captured image information is stored in an image storage part such as an internal HDD.

In step S3, the image data stored in the storage part is transferred via the network 103 to the server 102. At this point, appendant information such as a creator name or appendant information characteristic of the device such as a device ID may be transferred at the same time.

In step S4, it is determined whether the transfer of the image data has succeeded. If it has succeeded, it proceeds to step S5, and if it has failed, it returns to step S3 so as to perform re-transferring.

In step S5, the image data, which has been successfully transferred, is deleted from the image storage part.

Thereby, the operation on the input/output device 101 side is completed.

The operation on the server 102 side of FIG. 33(b) is performed when the image data is received via the network 103 from the input/output device 101.

In step S1 of FIG. 33(b), the image data is received from the input/output device 101.

In step 52, time information indicating the present time is acquired from the RTC 117.

In step S3, the received image data and time information are stored in a database stored in the hard disk. At this point, it is preferable that the time information be buried in the image data using a digital watermarking technique as previously described. Alternatively, the ID of the image data and the time information may be stored in a table format in the database, being correlated with each other. Further, the appendant information such as a creator name or a device ID may be stored in the database together with the image data and the time information.

As described above, according to the first embodiment of the electronic document certifying system, the file server storing electronic document files is provided with the date and time setting function, and the built-in clock (RTC) of the file server is set to the exact date and time. On acquiring image data, the input/output device immediately transmits the image data to the file server. The file server, letting the time at which the image data is received be time information, stores the image data together with the time information in the database. At this point, it is desirable that the image data and the time information be stored in the file server, being integrated in such a form as to be difficult to falsify.

### (2) Second Embodiment

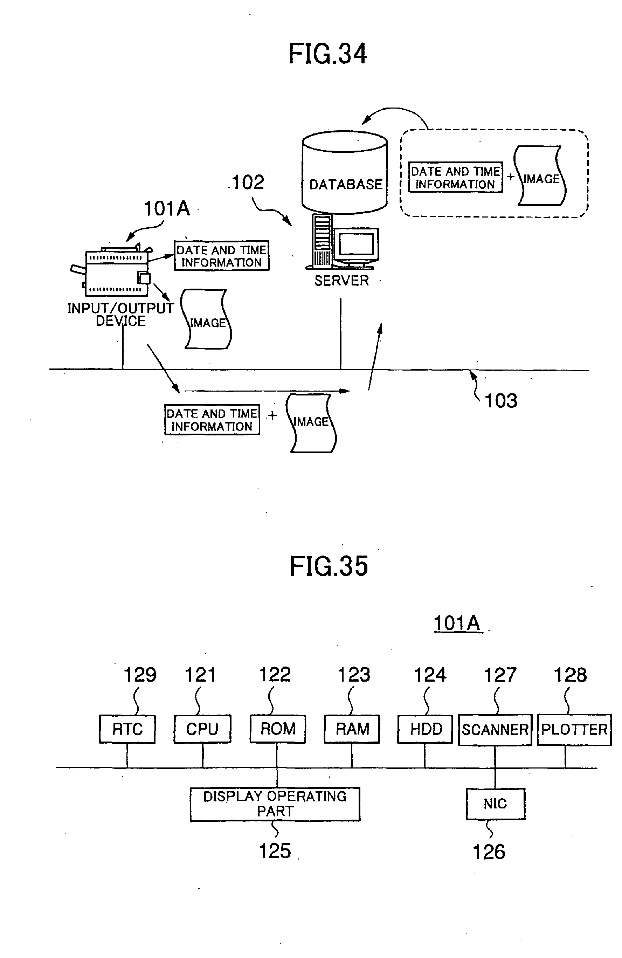

FIG. 34 is a diagram showing a second embodiment of the electronic document certifying system according to the present invention.

The electronic document certifying system of FIG. 34 includes an input/output device 101A, the server 102, and the network 103. The input/output device 101A and the server 102 are connected via the network 103. The second embodiment differs from the first embodiment in the configuration of the input/output device. The input/output device 101A has a function of acquiring time information.

FIG. 35 is a diagram showing the configuration of the input/output device 101A. The same elements as those of FIG. 32 are referred to by the same numerals, and a description thereof will be omitted.

The input/output device 101A includes the CPU 121, the ROM 122, the RAM 123, the HDD 124, the display operating part 125, the NIC 126, the scanner 127, the plotter 128, and an RTC 129. The RTC 129 is a real-time clock and generates time information indicating the present time.

The input/output device 101A may be a multifunction peripheral as shown in FIG. 1 with an RTC function added thereto.

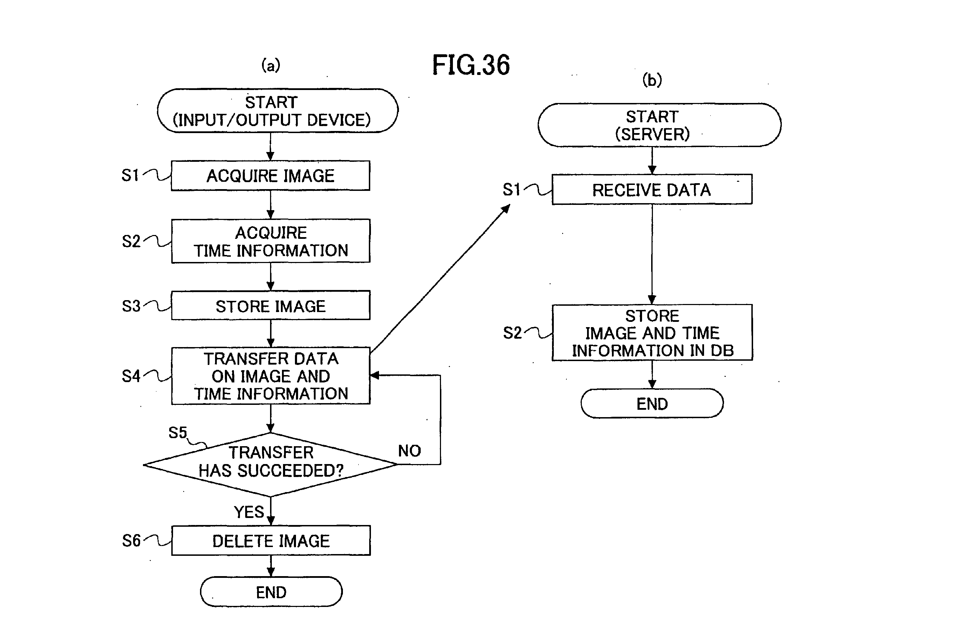

FIG. 36 is a flowchart showing the operation of the second embodiment of the electronic document certifying system according to the present invention. In FIG. 36, (a) shows the operation flow on the input/output device 101A side, and (b) shows the operation flow on the server 102 side.

In step S1 of FIG. 36(a), the input/output device 101A acquires image information. In step S2, time information indicating the present time is acquired from the RTC 129 of the input/output device 101A. In step S3, the image information is stored in the input/output device 101A together with the time information. In step S4, the image data and the time information stored in a storage part are transferred via the network 103 to the server 102.

In step S5, it is determined whether the transfer of the image data and the time information has succeeded. If it has succeeded, it proceeds to step S6, and if it has failed, it returns to step S3 so as to perform re-transferring. 'In step S6, the image data and the time information that have been successfully transferred are deleted from the image storage part. Thereby, the operation on the input/output device 101A side is completed.

The operation on the server 102 side is performed when the image data and the time information are received via the network 103 from the input/output device 101.

In step S1 of FIG. 36(b), the image data and the time information are received from the input/output device 101A. In step S2, the received image data and time information are stored in the database stored in the HDD. Thereby, the operation is completed.

In storing the image data and the time information, it is preferable that the time information be buried in the image data using a digital watermarking technique as previously described. Alternatively, the ID of the image data and the time information may be stored in a table format in the database, being correlated with each other. Further, the appendant information such as a creator name or a device ID may be stored in the database together with the image data and the time information. The operation of integrating the image data and the time information in such a form as to be difficult to falsify, such as digital watermarking, may be performed on the input/output device 101A side before transferring the data.

As described above, according to the second embodiment of the electronic document certifying system, the input/output device acquiring an electronic document is provided with the date and time setting function, and the built-in clock (RTC) of the input/output device is set to the exact date and time. On acquiring image data, the input/output device immediately acquires time information, and thereafter, transmits the image data and the time information to the file server. Receiving the image data and the time information, the file server stores the image data and the time information in the database. The second embodiment is different from the first embodiment in that the time information is acquired on the input/output device side at the time of acquiring the image information. Therefore, in light of the certification of date and time, there is no particular need to make haste in transferring data to the file server. Accordingly, in the second embodiment, after acquiring the image data and its appendant information including the time information, the information may be stored in the input/output device and transferred to the file server at a time set by a transfer time setting function.

The transfer time setting function may transfer, by the control of the CPU 121 of FIG. 35, the image data and the time information to the file server after the passage of a predetermined period of time since their acquisition. Alternatively, a transfer time may be entered from the display operating part 125 of FIG. 35 so that the transfer time is set and a transfer operation is performed at the set time under the control of the CPU 121.

Further, transferring may be set so as to be re-performed after a predetermined period of time even if the transferring fails when the file server is down or the network has a failure. Alternatively, the file server may transmit a notification to the input/output device when the file server recovers, so that the image data and the time information are transferred immediately in response to the notification.

### (3) Third Embodiment

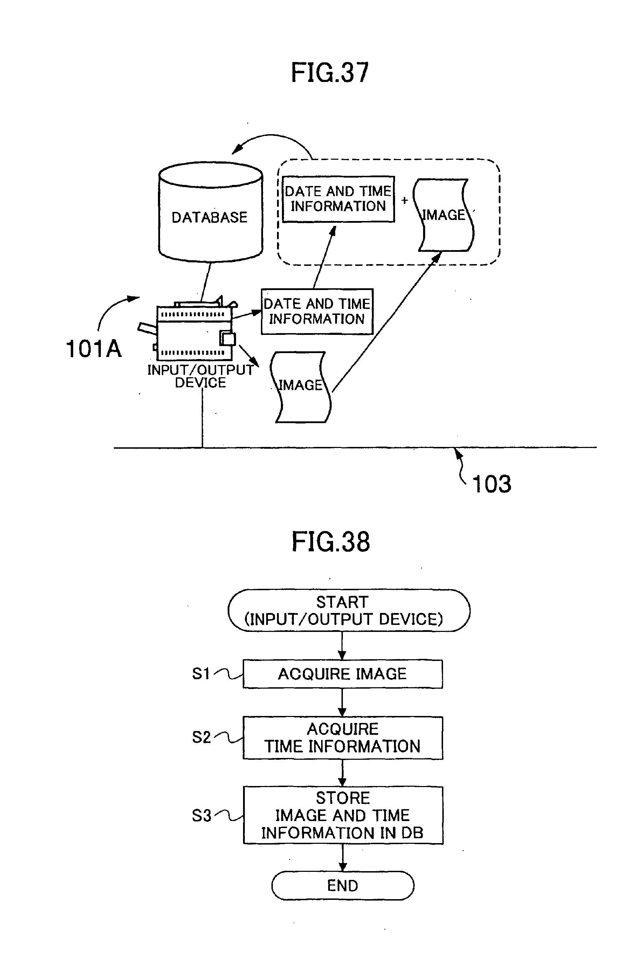

FIG. 37 is a diagram showing a third embodiment of the electronic document certifying system according to the present invention. According to the electronic document certifying system of FIG. 37, the input/output device 101A alone forms the system. It is preferable that the input/output device 101A be connected to the network 103. The network 103, however, is not an essential component. The input/output device 101A of the third embodiment may have the same configuration as the input/output device 101A of the second embodiment shown in FIG. 35.

FIG. 38 is a flowchart showing the operation of the third embodiment of the electronic document certifying system according to the present invention.

In step S1 of FIG. 38, the input/output device 101A acquires image information. In step S2, time information indicating the present time is acquired from the RTC 129 of the input/output device 101A. In step S3, the image information, together with the time information, is stored in a database stored in the hard disk the input/output device 101A. Thereby, the operation is completed.

In storing the image data and the time information, it is preferable that the time information be buried in the image data using a digital watermarking technique as previously described. Alternatively, the ID of the image data and the time information may be stored in a table format in the database, being correlated with each other. Further, the appendant information such as a creator name or a device ID may be stored in the database together with the image data and the time information.

As described above, according to the third embodiment of the electronic document certifying system, the input/output device acquiring an electronic document is provided with the date and time setting function, and the built-in clock (RTC) of the input/output device is set to the exact date and time. On acquiring image data, the input/output device immediately acquires time information, and stores the image data and the time information in the database of the input/output device.

### (4) Fourth Embodiment

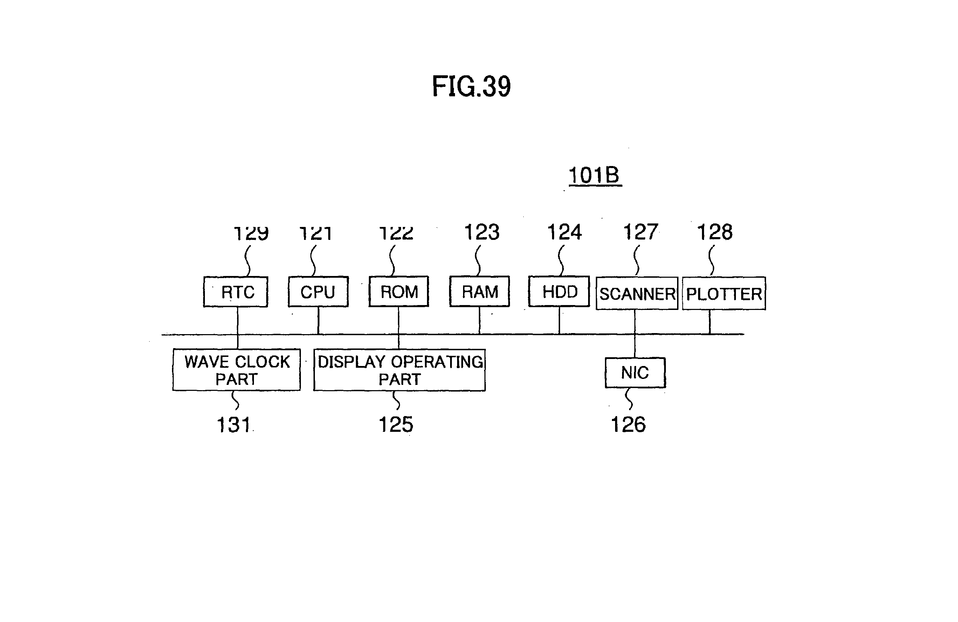

FIG. 39 is a diagram showing a fourth embodiment of the electronic document certifying system according to the present invention. In the fourth embodiment, the input/output device 101A employed in the second and third embodiments of the electronic document certifying system is provided with a time information acquiring function. FIG. 39 shows an input/output device 101B provided with the time information acquiring function.

The input/output device 101B includes a wave clock part 131 in addition to the input/output device 101A shown in FIG. 35. The wave clock part 131 set its time indication to the exact time by receiving a time-indicating radio wave transmitted from a predetermined transmission station to a wide area. By using the wave clock part 131, the start time and the end time of an input operation in the operation of an image input device and the start time and end time of an output operation in the case of outputting, for instance, are obtained from the wave clock part 131 to be part of the appendant information of data. As previously described, the appendant information of data may include the serial number of the input/output device and information required for protecting copyright such as a user name if recognizable.

When the electronic document storing and managing system is connected to a network, the built-in clock may be set to the exact date and time by constantly accessing a reliable NTP (network time protocol) or NTP (simple network time protocol) server.

The electronic document certifying system according to the present invention, which is thus described above, is not limited to the configurations of the above-described embodiments. The first and second embodiments, for instance, show configurations where a single input/output device is connected to a file server. Needless to say, by connecting a variety of input/output devices to the network to which a device having the function of a file server is connected, the time information of the image information acquired from the various input/output devices can be handled collectively. In this case, all of the acquired image information and appendant information may be transferred to the server to be integrated and stored on the server side, thereby reducing the load on each input/output device. This prevents omission in the capturing of data in the input/output devices.

In the case of providing the correlating function for certifying the combination of the data such as the image information and the appendant information such as the time information on the server side apart from the input/output device in the above-described embodiments, the combination of the data and the appendant information is transferred via the network. At this point, the identity of the contents of the transferred information may be checked by confirming the contents mutually on the data receiving side and on the data transmitting side. Further, the correctness of the time information may be checked by confirming that the difference between the received time information and the present time is appropriate, that is, whether the difference therebetween is equal to the time of communication required in transferring the data on the network. In this case, by confirming that the time information falls within the allowable range of the time of communication on the network by setting a threshold for the time information, the system can be configured easily although slightly lacking in the accuracy of time.

According to the above-described electronic document certifying system, in the configuration where the present time is acquired as the time information on the server side, data is automatically registered, without a user consciously registering the data, when the input/output device is used or the electronic data is relayed or processed. Therefore, omission of registration or a delay in the date and time of registration can be prevented. Further, the user can be saved from the trouble of selecting and registering documents to be registered, and the conventional input/output device without a time managing function may be used as the input/output device. Further, in the case of embedding date and time information in an image, there is no need to prepare the embedding operation on the input/output device side. Furthermore, in the case of connecting a plurality of network devices, there in no need to prepare the same function in each input/output device, and the management of time and data can be unified.

In the configuration where the present time is acquired as the time information on the input/output device side, even if the network is congested, the date and time information to be added to electronic data can be prevented from being later than the date and time at which the electronic data is actually captured into the input/output device.

If a large amount of data is collectively transferred, the load on the network is increased so that other network devices may be affected. On the other hand, in the configuration where the time of data transfer to the server can be set, it is possible to reduce the load on the network by transferring the data when the load is small, or little by little. Thereby, the possibility of affecting other network devices is eliminated. Further, data may be retained temporarily while the server is down, and be transferred when the server recovers. Thereby, loss of data can be avoided. In a system configuration without a server, it may be employed as a simple server although its storage capacity may be limited.

Thus, according to the electronic document certifying system of the present invention, when data of a certain medium format is processed, relayed, or converted to another medium format via an electronic data format as in the case of outputting electronic data in the form of a paper print, making a copy of the electronic data, or sending an electronic mail, the electronic data is automatically registered. Therefore, a user can be saved from the trouble of performing a registration operation each time.

## Claims

1. A document capturing device including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means for displaying information for a variety of operations; operation screen and user name specifying screen switching means for switching, in said display means, an operation screen for operating a copying function of copying the image data, a document transmitting function of transmitting the image data to the destination, or a document reading function by the image reading means and a user name specifying screen for specifying names of users using said functions on the operation screen; and user name initial-part search and selective display means for performing a search on the user names by initial parts thereof using at least one letter or figure and displaying a result on the user name specifying screen to which switching has been performed by said switching means.

2. The document capturing device as claimed in claim 1, **characterized in that** said user name initial-part search and selective display means comprises: notification means that, when there is no corresponding user name, issues a notification to that effect; and means for displaying a user name corresponding to at least one letter or figure subsequent to that of the initial-part search.

3. The document capturing device as claimed in claim 1, **characterized by** user name specifying screen and user name list display screen switching means for switching the user name specifying screen and a user name list display screen displaying a list of the user names selected on the user name specifying screen.

4. The document capturing device as claimed in claim 1, **characterized by** user list display means for displaying the users selected on the user specifying screen when the user name specifying screen is switched to the operation screen of the copying function, the document transmitting function, or the document reading function by said operation screen and user name specifying screen switching means.

5. The document capturing device as claimed in claim 1, **characterized by** voice notification means for notifying by voice a list of the users selected on the user name specifying screen.

6. A document capturing device including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means displaying information for a variety of operations; operation screen/user name specifying screen/list display screen switching means for switching, in said display means, an operation screen for operating a copying function of copying the image data, a document transmitting function of transmitting the image data to the destination, or a document reading function by the image reading means, a user name specifying screen for specifying names of users using said functions on the operation screen, and a list display screen for displaying a list of image data of documents stored in the secondary storage device; and reprocessing means for specifying image data of one or more of the documents on the list display screen to which switching has been performed by said switching means and performing reprocessing using said functions.

7. A document capturing device including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means displaying information for a variety of operations; operation screen/user name specifying screen/list display screen switching means for switching, in said display means, an operation screen for operating a copying function of copying the image data, a document transmitting function of transmitting the image data to the destination, or a document reading function by the image reading means, a user name specifying screen for specifying names of users using said functions on the operation screen, and a list display screen for displaying a list of image data of documents stored in the secondary storage device, the image data being processed by the users of the user names specified on the user name specifying screen; and reprocessing means for specifying image data of one or more of the documents on the list display screen to which switching has been performed by said switching means and performing reprocessing using said functions.

8. The document capturing device as claimed in claim 6 or 7, **characterized by** deletion means for deleting the image data of the documents specified on the list display screen from the secondary storage device.

9. The document capturing device as claimed in claim 7, **characterized by** switching restricting means for restricting switching to the list display screen when a request for switching to the list display screen is made by said operation screen/user name specifying screen/list display screen switching means.

10. A document filing system including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means for displaying information for a variety of operations; operation screen and user name specifying screen switching means for switching, in said display means, an operation screen for operating a copying function of copying the image data, a document transmitting function of transmitting the image data to the destination, or a document reading function by the image reading means and a user name specifying screen for specifying names of users using said functions on the operation screen; and user name initial-part search and selective display means for performing a search on the user names by initial parts thereof using at least one letter or figure and displaying a result on the user name specifying screen to which switching has been performed by said switching means.

11. The document filing system as claimed in claim 10, **characterized in that** said user name initial-part search and selective display means comprises: notification means that, when there is no corresponding user name, issues a notification to that effect; and means for displaying a user name corresponding to at least one letter or figure subsequent to that of the initial-part search.

12. The document filing system as claimed in claim 10, **characterized by** user name specifying screen and user name list display screen switching means for switching the user name specifying screen and a user name list display screen displaying a list of the user names selected on the user name specifying screen.

13. The document filing system as claimed in claim 10, **characterized by** user list display means for displaying the users selected on the user specifying screen when the user name specifying screen is switched to the operation screen of the copying function, the document transmitting function, or the document reading function by said operation screen and user name specifying screen switching means.

14. The document filing system as claimed in claim 10, **characterized by** voice notification means for notifying by voice a list of the users selected on the user name specifying screen.

15. A document filing system including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means displaying information for a variety of operations; operation screen/user name specifying screen/list display screen switching means for switching, in said display means, an operation screen for operating a copying function of copying the image data, a document transmitting function of transmitting the image data to the destination, or a document reading function by the image reading means, a user name specifying screen for specifying names of users using said functions on the operation screen, and a list display screen for displaying a list of image data of documents stored in the secondary storage device; and reprocessing means for specifying image data of one or more of the documents on the list display screen to which switching has been performed by said switching means and performing reprocessing using said functions.

16. A document filing system including:
image reading means for reading a document as image data; printing means for printing the image data read by the image reading means; transmitting means for transmitting the image data read by the image reading means to a destination via a communication line; and
means for storing the image data read by the image reading means in a secondary storage device or transmitting the image data read by the image reading means to a storage device connected via the communication line or a network and requesting for the image data to be stored, **characterized by**:
display means displaying information for a variety of operations; operation screen/user name specifying screen/list display screen switching means for switching, in said display means, an operation screen for operating a copying function of copying the image data, a document transmitting function of transmitting the image data to the destination, or a document reading function by the image reading means, a user name specifying screen for specifying names of users using said functions on the operation screen, and a list display screen for displaying a list of image data of documents stored in the secondary storage device, the image data being processed by the users of the user names specified on the user name specifying screen; and reprocessing means for specifying image data of one or more of the documents on the list display screen to which switching has been performed by said switching means and performing reprocessing using said functions.

17. The document filing system as claimed in claim 15 or 16, **characterized by** deletion means for deleting the image data of the documents specified on the list display screen from the secondary storage device.

18. The document filing system as claimed. in claim 16, **characterized by** switching restricting means for restricting switching to the list display screen when a request for switching to the list display screen is made by said operation screen/user name specifying screen/list display screen switching means.

19. An image processing apparatus having at least one of a scanning function, a printing function, a copying function, and a facsimile function, the image processing apparatus being connected via a communication channel to a server storing image data, the image processing apparatus comprising:
a memory storing image information printed on or scanned from a paper sheet;
a transfer unit automatically transferring appendant information specifying the image information to the server together with the image information irrespective of the presence or absence of an explicit command to transfer from a user; and
a display operating unit displaying a list of a plurality of users so as to obtain a user name as the appendant information so that the user selects the user name,
**characterized in that** a search is performed on the user names by initial parts thereof using at least one letter or figure entered from said display operating unit and a result is displayed.

20. An image processing apparatus having at least one of a scanning function, a printing function, a copying function, and a facsimile function, the image processing apparatus being connected via a communication channel to a server storing image data, the image processing apparatus comprising:
a memory storing image information printed on or scanned from a paper sheet;
a transfer unit automatically transferring the image information to the server irrespective of the presence or absence of an explicit command to transfer from a user; and
a display operating unit displaying a list of the image data stored in said memory,
**characterized in that** image information selected from the displayed list is reprocessed using at least one of the functions.

21. The image processing apparatus as claimed in claim 20, **characterized in that** the image information is deleted from said memory when the image information is transferred to the server.

22. The image processing apparatus as claimed in claim 21, **characterized in that** a time to transfer the image information to the server is specified in advance.

23. The image processing apparatus as claimed in claim 20, **characterized in that** the image information printed on or scanned from the paper sheet is transferred to the server immediately after being stored in said memory, and is preserved in said memory for a predetermined period of time.

24. An electronic document certifying system, **characterized by** storing data captured from an input device as electronic data, automatically storing data output from an output device onto paper, or retaining and certifying date and time of electronic data stored in an electronic document storing system automatically storing electronic data processed or relayed thereby, **characterized in that**:
a server retaining the electronic data acquired from the input/output device and date and time of acquisition thereof is provided on a network as a device different from the input/output device;
the server comprises date and time setting means for setting the date and time of the acquisition of the electronic data;
the input/output device comprises transfer means for transferring the electronic data to the server; and
the date and time of the acquisition of the electronic data in the date and time setting means is a time at which the electronic data is transferred to the server.

25. An electronic document certifying system, **characterized by** storing data captured from an input device as electronic data, automatically storing data output from an output device onto paper, or retaining and certifying date and time of electronic data stored in an electronic document storing system automatically storing electronic data processed or relayed thereby, **characterized in that**:
a server retaining the electronic data acquired from the input/output device and date and time of acquisition thereof is provided on a network as a device different from the input/output device;
the input/output device comprises date and time setting means for setting the date and time of the acquisition of the electronic data;
the input/output device comprises transfer means for transferring the electronic data and date and time of acquisition thereof to the server; and
the server comprises data storing means.

26. The electronic data certifying system as claimed in claim 25, **characterized in that** the input/output device comprises document storing means and transfer time setting means for setting a time at which said transfer means is operated.

27. An electronic document certifying system storing data captured from an input device as electronic data, automatically storing data output from an output device onto paper, or storing electronic data to be processed or relayed,
**characterized by** comprising:
date and time acquiring means for acquiring exact date and time of storage of the electronic data;
conversion means for converting data on the date and time of the storage, the electronic data, and a combination thereof to an unchangeable state;
means for storing and managing the converted data; and
means for extracting the data on the date and time of the storage of the electronic data at a later time.

28. An electronic document certifying system, **characterized in that** electronic data is automatically stored together with date and time information without the intervention of a user when the electronic data is created, converted, processed, or relayed.

29. An image processing system having at least one of a scanning function, a printing function, a copying function, and a facsimile function and having a function of storing image data,
**characterized by** comprising:
a data acquiring unit acquiring image information printed on or scanned from a paper sheet;
a time information generating unit generating a present time as time information; and
a storage unit that correlates and automatically stores and retains the image information and the time information irrespective of the presence or absence of an explicit command to store from a user, and prevents the time information correlated with the image information from being changed.

30. The image processing system as claimed in claim 29, **characterized in that** the correlation is made by embedding the time information in the image information by digital watermarking.
